# FASCICULE DE BREVET EUROPEEN

(11) **EP 0 481 836 B1**
(45) Date de publication et mention de la délivrance du brevet: **18.05.1994**
(21) Numéro de dépôt: 91402555.6
(22) Date de dépôt: 25.09.1991
(51) Int. Cl.: F16H 7/12

(54) **Dispositif de tension d'un galet tendeur pour transmission par lien souple, fonctionnant par déformation élastique d'un solide parallélépipédique déformable**
Spannvorrichtung für Riemenspannrolle funktionierend durch elastische Deformation eines massiven deformierbaren Quaders
Tensioning device for belt tensioning idler, functioning by elastic deformation of a parallel epipedic body

(30) Priorité: 16.10.1990 FR 9012871
(43) Date de publication de la demande: 22.04.1992
(73) Titulaire: CAOUTCHOUC MANUFACTURE ET PLASTIQUES, F-78000 Versailles (FR)
(72) Inventeur: Stamm, Philippe, F-58300 Decize (FR); Vaxelaire, Alain, F-63540 Romagnat (FR)

(56) Documents cités:
- EP-A- 0 335 642
- DE-A- 2 430 704
- DE-A- 3 637 212
- FR-A- 2 104 394
- GB-A- 1 013 701
- GB-A- 1 028 884
- GB-A- 2 027 514
- US-A- 3 158 256

## Description

L'invention est relative au domaine des transmissions à poulies et lien souple fonctionnant par adhérence mécanique ; elle concerne un dispositif tendeur pressant élastiquement un galet sur un lien souple, tel qu'une courroie plate, trapézoïdale ou multistries, plus particulièrement destinée à l'entraînement des accessoires sur moteurs d'automobile.

Un dispositif selon les caractéristiques mentionnées dans le préambule de la revendication 1 est connu par exemple du document DE-A 36 37 212.

Les dispositifs tendeurs de liens souples de transmission connus exercent une poussée élastique sur la courroie ou la chaîne d'une transmission par adhérence mécanique, au moyen d'un galet fou déplaçable, porté en général par un bras oscillant, sur lequel un couple élastique de rappel est exercé par un ressort. Dans les dispositifs à chaîne ou à entraînement positif, par courroie souple dite synchrone, le dispositif appelé galet tendeur est généralement bloqué, après réglages, pour éviter les pulsations dynamiques dans les brins du lien souple entre les poulies.

Il en est de même, pour d'autres raisons, dans les transmissions à lien souple tel que les courroies trapézoïdales, lorsque l'élasticité de l'armature souple est mise à profit pour assurer une tension élastique appropriée entre des poulies à entraxes fixes, comme décrit dans le document EP-A 0 281 432 d'HUTCHINSON.

Le terme "galet tendeur" - aujourd'hui consacré par l'usage -s'applique, plus précisément, à la génération récente de liens souples dite courroies multistries, très utilisées dans l'industrie automobile, dans lesquelles l'adhérence mécanique se fait par une pluralité de faces inclinées sur les gorges striées de poulies. La très grande rigidité longitudinale de l'armature souple de renforcement textile est, alors, avantageusement compensée par une force élastique exercée par ressort appliquant un couple sur le bras portant ledit galet tendeur. Ce ressort se débat lors des variations dynamiques de la tension.

Dans une première famille de tels galets tendeurs, un palier portant l'axe du levier reçoit un couple élastique par ressort métallique. Un ressort de torsion, en hélice ou spirale, autorise une grande flexibilité, garantissant l'application d'une force sensiblement constante malgré les variations dynamiques, comme il est décrit dans les documents FR-A 2.509.408 de LITENS AUTOMOTIVE ou US-A 4.472.162 de DYNEER CORPORATION. La rançon d'une grande flexibilité est la recherche d'un amortissement des débattements dynamiques par des frictions de bagues de caoutchouc, cylindrique dans le premier document, conique dans le second, avec tous les aléas que présente la définition d'une friction de surface de caoutchouc sur métal pendant la vie d'une automobile.

Le document EP-A 0 013 704 de BOGE décrit un dispositif qui appartient à la famille précédente par l'utilisation d'un ressort à lame métallique enroulé en spirale ; il est également apparenté à la famille suivante du fait de l'adhérisation d'un élastomère amortisseur audit ressort.

Une seconde famille de dispositifs à galet tendeur s'affranchit des risques de friction, en faisant exercer le couple élastique par le caoutchouc lui-même, adhérisé à des bagues métalliques.
Les documents US-A 3.975.965 de DAYCO CORPORATION, US-A 4.144.772 de THE TORO COMPANY, GB-A 2.070.727 de ALAN CROSLEY PRITCHARD, ainsi que EP-A 0.157.193 de RIV-SKF décrivent cette technique : le premier cité propose l'amélioration de la liaison avec l'axe par des palettes accroissant la surface de contact axe/ élastomère, les trois autres en utilisant un axe carré. Dans tous ces cas, le tourillonnement du bras portant le galet se fait par déformation de l'élastomère.

L'amortissement des phénomènes pulsatoires n'est plus dû qu'à la viscoélasticité du matériau, souvent insuffisante à certains régimes résonants du moteur et des palliatifs complexes sont recherchés, comme un frein à bande, contrôlé par électronique, dans le brevet US 4.702.727 de DAIMLERBENZ, ou bien un amortissement à fluide visqueux, dans le document WO-A 84/01415 de DAYCO CORPORATION.

Des ressorts non torsionnels peuvent être également utilisés sur un dispositif basculant par rotation sur un palier, comme la sangle élastique décrite dans le brevet US 4.571.223 de GENERAL MOTORS, associée à un effet de came à frictions variables, ou bien un ressort à boudin rectiligne, noyé dans une gaine d'élastomère qui forme chambre pour un liquide d'amortissement comme proposé dans le document EP-A 0.243.237 d'HUTCHINSON. Le document FR-A 2.540.954 de PORSCHE décrit, outre un empilage de rondelles coniques formant ressort rectiligne, un contrôle électrique de la tension.

De telles sophistications, ajoutées à un système initialement très simple de tendeur élastique, sont la preuve que le problème du maintien de la tension du lien souple n'est pas résolu par un simple ressort. L'expérience des fabricants de galets tendeurs établit bien, en effet, que les problèmes dynamiques d'entrée en résonance à certains régimes du moteur sont ardus à résoudre par un simple apport d'amortissement extérieur, viscoélastique ou à friction.

L'analyse de l'art antérieur montre, à l'évidence, qu'un dispositif élastique de tension de lien souple présentant un caractère de simplicité - donc d'économie de réalisation - et pouvant comporter un moyen d'amortissement intégré des variations dynamiques de tension qui, ne faisant appel à aucun élément de friction, minimise les risques de variations dans le temps et d'usure précoce, tout en permettant un réglage simple d'une tension constante, n'est pas connu.

L'objectif de la présente invention est donc d'apporter une solution simple et compacte pour résoudre le problème de la tension de courroie, ou de tout lien souple en général, en appliquant au palier du galet tendeur un effort élastique par pièce déformable qui assure, en outre, les autres fonctions de guidage et éventuellement d'amortissement des vibrations du lien souple.
Pour ce faire, il est fait appel à la déformabilité élastique d'un solide parallélépipédique constitué d'un composite, assemblage multicouche de compositions élastomériques et de feuilles minces métalliques ou plastiques ou de lames flexibles composites en une matrice polymérique, thermoplastique ou thermodurcissable, renforcée de fibres longues, orientées monodirectionnellement.

Dans une application préférentielle, le module élastique de traction-compression du matériau composite dans ces lames flexibles composites est assez nettement inférieur à celui des ressorts métalliques pouvant être utilisés dans ce type d'application. Ceci permet, alors, une disposition spécifique de lames parallèles multiples, encastrées à leurs deux extrémités. Cette géométrie permet d'intégrer au dispositif un amortissement viscoélastique par association, au matériau composite constituant les lames flexibles composites, d'une composition élastomérique auquel elle est ou non adhérisée. La combinaison de ces matériaux apporte un accroissement de l'efficacité, en permettant une éventuelle précontrainte de la composition élastomérique, réglable à l'assemblage, de façon indépendante du réglage de la force agissant sur la tension élastique du lien souple.

L'invention consiste en un dispositif de tension pressant élastiquement un galet sur un lien souple de transmission fonctionnant par adhérence mécanique, constitué d'un ressort intégrant éventuellement un moyen d'amortissement.

L'invention est caractérisée en ce que la pression sur ledit lien souple est exercée par la déformabilité élastique d'un solide parallélépipédique déformable constituant ledit ressort et dont les grandes faces sont formées d'un couple de lames flexibles composites, maintenues parallèles, écartées, par encastrement de leurs extrémités, dans une fixation enserrant un bloc porte-palier à l'extrémité mobile portant un galet tendeur, l'encastrement de l'extrémité fixé à la fixation réglable sur le carter du moteur portant éventuellement un moyen de modifier, sur une partie de la course élastique, la flexibilité dudit dispositif élastique de tension.
Dans certaines variantes, lesdites lames flexibles composites sont assemblées par l'intermédiaire de couche(s) amortissante(s) en composition élastomérique, - pour former un sandwich - assurant l'amortissement viscoélastique du dispositif élastique de tension.

Le solide parallélépipédique déformable est, selon les variantes, constitué, pour ses grandes faces,
- d'un couple de lames flexibles composites ;
- d'un couple de deux paires de lames flexibles composites ;
- d'un couple de lames flexibles composites, dont l'un des éléments est constitué d'une paire de lames flexibles composites, l'autre élément du couple étant une lame flexible composite unique ;
- d'un couple de deux ensembles dont l'un au moins est constitué de trois lames flexibles composites ;
- l'une des dispositions précédentes, dans laquelle est intégré un moyen d'amortissement des vibrations du lien souple, constitué d'un bloc élastomérique occupant tout ou partie de la section ménagée entre les lames flexibles composites qui l'encadrent ;
- l'une des dispositions précédentes où le nombre de lames flexibles composites de l'un des couples est au moins égal à deux, dans laquelle est insérée au moins une couche entre lames, en composition élastomérique amortissante ;
- l'une des dispositions précédentes comportant un moyen d'amortissement dans laquelle la composition élastomérique est intimement liée aux lames flexibles composites qui l'encadrent ;
- l'une des dispositions précédentes comportant un moyen d'amortissement dans laquelle une précontrainte de compression est imposée à la composition élastomérique, du fait de la disposition géométrique de l'encastrement des extrémités des lames flexibles composites.
- l'une des dispositions précédentes dans laquelle est inséré un moyen de modifier, sur une partie de la course élastique, la flexibilité du dispositif, par intervention soit d'une butée de limitation ou de correction mécanique de la flexibilité soit d'une lame flexible oblique destinée à réduire la rigidité du dispositif.

Chaque lame flexible composite est réalisée en un matériau composite, constitué soit d'une alternance multicouche de feuilles minces (métalliques ou en matériau polymérique flexible), et de couches minces en composition élastomérique auxquelles elles sont intimement liées, soit d'une matrice polymérique renforcée de fibres longues orientées monodirectionnellement.

Préférentiellement, le choix de la matrice et des fibres longues de renforcement permet la réalisation d'un matériau composite ayant un module élastique en traction-compression compris entre 30 et 150 GPa de manière à permettre la réalisation du dispositif élastique avec un nombre de lames flexibles composites limité à quatre ou à six et comportant, de ce fait, respectivement deux ou quatre couches amortissantes en composition élastomérique.

L'invention sera mieux comprise à la lecture de la description accompagnant les dessins, dans lesquels :
- la figure 1 est une vue partielle de la face d'un moteur d'automobile, montrant la disposition des poulies entraînant divers accessoires et le dispositif élastique de tension du lien souple selon l'invention ;
- la figure 2 schématise un dispositif élastique de tension réalisé sous forme d'un solide parallélépipédique déformable exerçant la pression sur un lien souple ;
- la figure 3 montre une possibilité d'intégration de l'amortissement mécanique des vibrations du lien souple par insertion d'un bloc élastomérique, lié ou non aux lames flexibles composites formant les grandes faces du solide parallélépipédique déformable ;
- la figure 4 représente une variante du dispositif élastique de tension où le solide parallélépipédique déformable est constitué sur ses grandes faces, de lames flexibles composites assemblées par paires et dont l'amortissement des vibrations du lien souple est assuré par un bloc élastomérique ;
- la figure 5 est une variante du dispositif élastique de tension à lames flexibles composites assemblées par paires avec amortissement intégré par insertion d'une couche élastique entre lames dans chacune des paires de lames flexibles composites ;
- la figure 6 regroupe plusieurs variantes du dispositif élastique de tension dont le solide parallélépipédique déformable comporte un couple de lames uniques, un couple de paires de lames ou une combinaison constituée d'une lame unique et d'une paire de lames flexibles composites ;
- la figure 7 illustre un dispositif élastique de tension incorporant une butée rigide de limitation mécanique de flexibilité ;
- la figure 8 est une variante du dispositif élastique de tension incorporant une butée flexible de limitation mécanique de flexibilité associée à un élément antagoniste ;
- la figure 9 représente une autre variante du dispositif élastique de tension dans lequel la fonction butée est assurée par la mise en tension d'une longueur de cable interne au solide parallélépipédique déformable ;
- la figure 10 illustre un dispositif élastique de tension à grande flexibilité par insertion d'une lame oblique semi-encastrée, dans le solide parallélépipédique déformable ;
- la figure 11 décrit en coupe axiale et vue partielle un dispositif élastique de tension réalisé par assemblages mécaniques ;
- la figure 12 montre en vue extérieure éclatée les différents composants de la variante décrite en figure 11, à l'état libre, avant assemblage ;
- la figure 13 représente une variante du dispositif élastique de tension dans laquelle les lames flexibles composites sont encastrées dans leurs supports ;
- la figure 14 est une vue perspective illustrant le montage du dispositif élastique de tension.

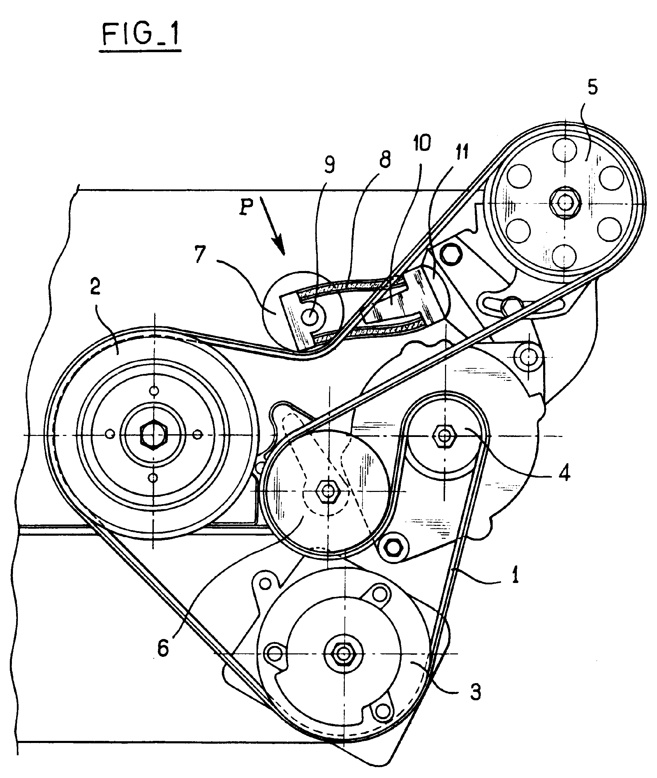

La figure 1 est une vue partielle montrant la face d'un moteur d'automobile ; qu'il soit monté axialement ou transversalement, les accessoires sont entraînés par un lien souple (1), par exemple du type courroie multistries, contenu dans un plan où il s'enroule sur plusieurs poulies de rayons différents mais présentant le même profil de gorges.

Une poulie motrice (2) est disposée sur l'axe du vilebrequin et communique son mouvement, d'une part aux accessoires à vitesse relativement lente, tels qu'un compresseur de conditionnement d'air, par une poulie réceptrice de grand diamètre (3) et à des accessoires tournant plus rapidement que le vilebrequin, tels qu'un alternateur, par une poulie réceptrice de petit diamètre (4).
S'il existe d'autres accessoires, tels que pompe à vide ou pompe d'assistance de direction, une poulie réceptrice complémentaire (5) complète le parcours sinueux du lien souple (1) dont les besoins d'adhérence mécanique, en particulier par un angle d'enroulement dépassant 180 degrés autour de la poulie réceptrice de petit diamètre (4), nécessitent un renvoi par un galet fixe (6).
Les réglages au montage sont, par exemple, assurés par une boutonnière pour le positionnement de la poulie réceptrice complémentaire (5).
Ledit galet fixe (6), de diamètre quelconque, de même que le galet tendeur (7), roulent par une face cylindrique sur le dos du lien souple (1), en entraînant, si nécessaire, un accessoire à faible besoin d'adhérence mécanique. C'est la poussée permanente, par un dispositif élastique de tension (8) sur ledit galet tendeur (7) qui permet l'entraînement par adhérence mécanique de ces divers accessoires.
Ledit galet tendeur (7) est disposé, de façon préférentielle, sur le brin le moins tendu du lien souple (1), à la sortie de la poulie motrice (2). La poussée (P), qui a pour effet d'accroître légèrement l'angle d'enroulement du lien souple (1) sur les deux poulies encadrantes, doit se faire selon la bissectrice de l'angle obtus formé par les brins correspondants dudit lien souple (1). Le dispositif élastique de tension (8), qui assure cette poussée (P), porte le palier (9) du galet tendeur (7) et il est encastré, ainsi qu'une éventuelle butée de limitation mécanique de flexibilité (10), par une fixation réglable (11) sur le carter du moteur.

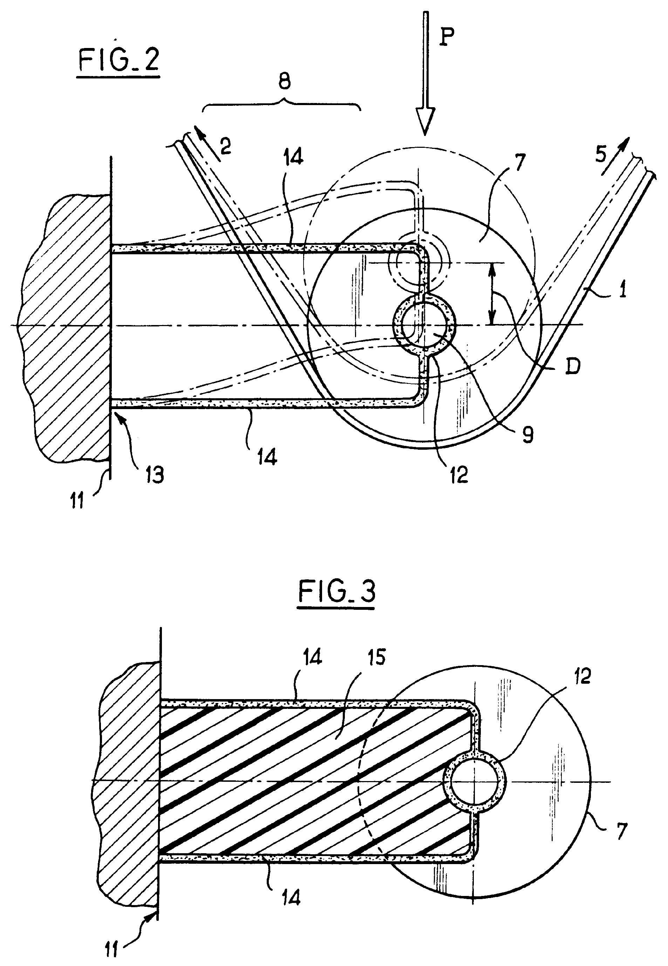

La figure 2 schématise le cas général d'un dispositif élastique de tension (8), représenté en traits pleins dans sa position de repos en appui sur le lien souple (1) et qui est réalisé sous la forme d'un solide parallélépipédique déformable.
Le couple de lames flexibles composites (14) constitue les deux grandes faces du solide parallélépipédique déformable, les petites faces étant constituées des zones d'encastrement. Le solide parallélépipédique porte le palier (9) du galet tendeur (7) au moyen d'un bloc porte-palier (12) intégré audit solide parallélépipédique déformable sur une petite face, l'autre étant rendue solidaire, par les encastrements (13) de la fixation réglable (11), ici symbolisée par une paroi rigide.
Pour exercer la poussée (P) sur le lien souple (1), une déformation élastique (D) est imposée aux parties déformables du solide parallélépipédique dont les extrémités sont encastrées dans la fixation réglable (11) et dans le bloc porte-palier (12).

La position déformée (représentée en traits mixtes) est schématiquement illustrée attachée à la fixation réglable (11). Le lien souple (1) est alors tendu entre la poulie motrice (2) et la poulie réceptrice complémentaire (5), par exemple par déplacement de ladite poulie réceptrice complémentaire (5), au montage, sur une boutonnière.

Le couple de lames flexibles composites (14) est donc déformé d'une manière différente selon la nature de l'encastrement décrit dans les différentes variantes.

La figure 3 montre une possibilité d'intégration de l'amortissement mécanique des vibrations du lien souple par insertion d'un bloc élastomérique (15) intégré dans le solide parallélépipédique déformable représenté en position de repos.

Réalisé à la même forme que ce dernier, le bloc élastomérique (15) est soit en appui simple sur ledit solide parallélépipédique déformable et conserve, de ce fait, une possibilité de microglissements, soit intimement lié par des moyens appropriés, tels que des colles ou une adhérisation in situ, aux lames flexibles composites (14) qui l'encadrent.

Ledit bloc élastomérique (15) occupe, dans cette variante, toute la section rectangulaire ménagée entre lesdites lames flexibles composites (14) représentées au nombre de deux.

Dans une variante non représentée, le bloc élastomérique (15) pourrait n'occuper que partiellement la section libre entre les lames composites élastiques (14) auxquelles il serait alors intimement lié sur la largeur de contact, pour éviter son déplacement sous l'effet des sollicitations.

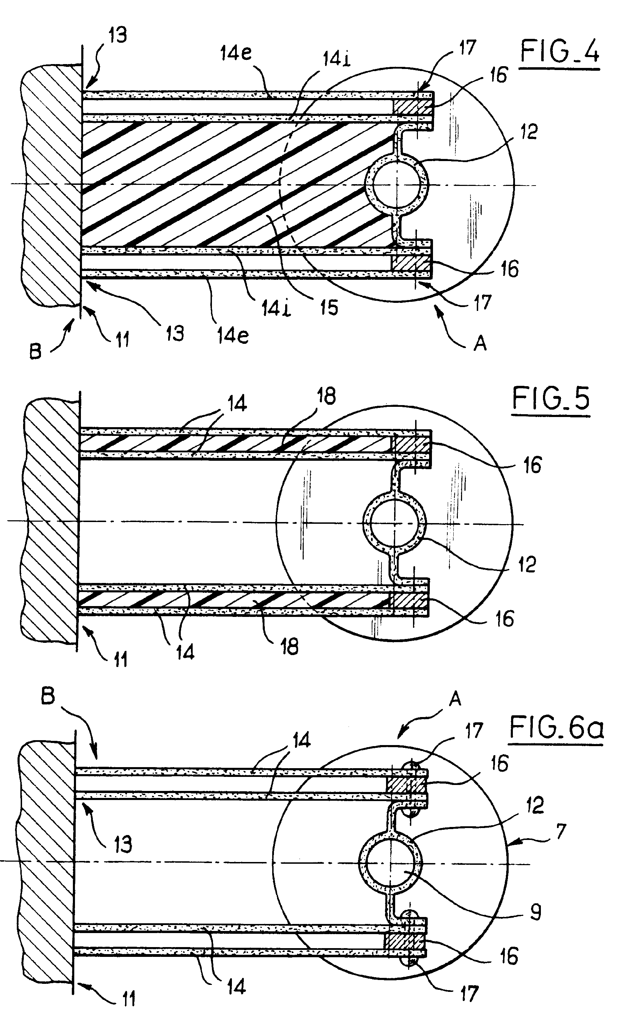

La figure 4 représente, dans les mêmes conditions de repos, une variante du solide parallélépipédique déformable, composé sur ses grandes faces, de quatre lames flexibles composites (14i) et (14e), assemblées par paires, et dont l'amortissement est assuré par un bloc élastomérique (15) occupant tout (comme représenté) ou partie de la section libre entre lesdits lames flexibles composites (14).
Lorsque le bloc élastomérique (15) occupe la totalité de la section libre, il peut ou non être intimement lié aux lames flexibles composites (14i) qui l'encadrent. Lorsque le bloc élastomérique (15) n'occupe que partiellement la section libre, il est intimement lié, sur la largeur de contact, aux lames flexibles composites (14i) qui l'encadrent pour éviter son déplacement sous l'effet des sollicitations.
La fixation mécanique de l'extrémité mobile (A) du bloc porte-palier (12) assure donc l'encastrement. De même, les deux lames flexibles composites extérieures (14e) sont liées aux deux lames flexibles composites intérieures (14i) par des entretoises (16).

Un jeu de boulons ou de rivets symbolisés par les axes (17) assure la fixation de cet encastrement. De manière analogue (non représentée) l'extrémité fixe (B) est rendue solidaire de la fixation réglable (11) par les encastrements (13).

La figure 5 représente une variante du dispositif élastique de tension où le solide parallélépipédique déformable présente également une disposition dans laquelle les lames flexibles composites (14) sont assemblées par paires mais dans laquelle l'amortissement mécanique des vibrations du lien souple est intégré par insertion dans chacune des paires de lames flexibles composites (14) d'une couche entre-lames (18), en composition élastomérique, éventuellement liée à la face en contact des lames flexibles composites (14) qui l'encadrent.
La fixation mécanique au bloc porte-palier (12) par l'intermédiaire des entretoises (16) permet éventuellement - lorsque lesdites entretoises (16) présentent une épaisseur inférieure à celle des couches entre-lames (18) - d'exercer une précontrainte de compression sur la composition élastomérique constituant lesdites couches entre-lames (18). Cette précontrainte de compression, par déformation de 10 % de l'épaisseur initiale desdites couches entre-lames (18) par exemple, participe, par effet hystérétique supplémentaire, au voisinage de l'extrémité des lames flexibles composites (14) au moins, à l'amortissement viscoélastique des vibrations du lien souple, produit par les variations alternées du cisaillement au sein de la masse de la composition élastomérique, lors de la flexion parallèle des paires de lames flexibles composites (14).

Dans une variante non représentée, l'amortissement mécanique des vibrations du lien souple peut être complété par l'adjonction, dans tout ou partie de la section rectangulaire comprise entre les lames flexibles composites (14) internes, d'un bloc élastomérique (15), venant renforcer l'effet d'amortissement des couches entre-lames (18) si les contraintes de l'application l'exigent.

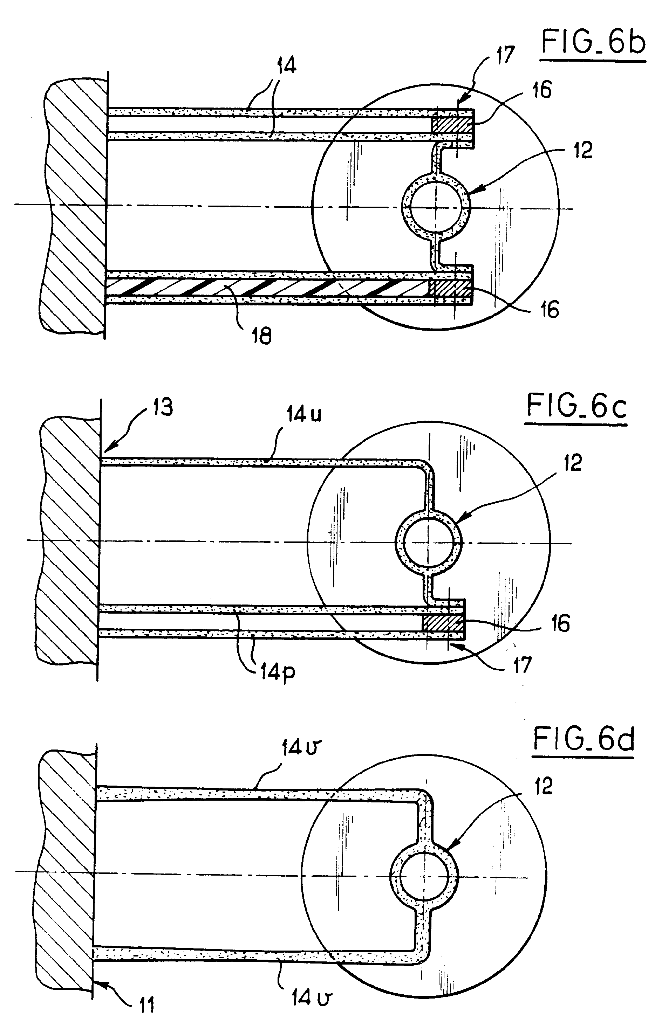

La figure 6 regroupe plusieurs variantes du dispositif élastique de tension selon l'invention, dont le solide parallélépipédique déformable comporte un couple de lames uniques, un couple de paires de lames ou une combinaison constituée d'une lame unique et d'une paire de lames flexibles composites.

La vue 6a représente le cas où le solide parallélépipédique déformable est constitué, sur ses grandes faces, de deux paires de lames flexibles composites (14), sans adjonction d'un élément d'amortissement visco-élastique des vibrations du lien souple.
Lesdites lames flexibles composites (14) sont encastrées deux à deux par un moyen mécanique tel que le jeu d'entretoises (16), enserrées par les axes (17) où sont ici représentés des rivets assurant simultanément la fixation de chaque paire de lames flexibles élastiques (14) au bloc porte-palier (12). Cet encastrement multiple est représenté à l'extrémité mobile (A). Un dispositif identique ou différent, symbolisé par une paroi rigide, assure les encastrements (13) à l'extrémité fixe (B).
Un guidage sur une trajectoire sensiblement rectiligne est, par conséquent, imposé au galet tendeur (7) supporté par son palier (9) dans la déformation élastique du solide parallélépipédique déformable.
La rigidité importante dans les directions perpendiculaires, assurée par la largeur des lames flexibles composites (14), permet un maintien de façon que l'axe du palier (9) reste parfaitement orthogonal au plan de la figure.
L'écartement des paires de lames flexibles composites (14) par le bloc porte-palier (12) procure, de même, une grande résistance aux vrillages des lames flexibles composites (14) sous l'effet du couple de torsion parasite formé par le bras de levier du galet tendeur (7), du fait que ce dernier est écarté, en porte à faux, latéralement au plan de symétrie axiale des lames flexibles composites (14).

La vue 6b illustre le cas où les grandes faces du solide parallélépipédique déformable sont constituées de deux paires de lames flexibles composites (14), l'une étant munie d'une couche entre-lames (18), en composition élastomérique intimement liée, par collage ou par adhérisation in situ, à chacune des lames flexibles composites (14) qui l'encadrent ; l'autre paire de lames flexibles composites (14), solidarisée comme la première par l'intermédiaire d'un jeu d'entretoises (16) ne comporte pas, dans cette variante, de couche entre-lames d'amortissement visco-élastique des vibrations du lien souple.

Le bloc porte-palier (12) est, ici, solidarisé par une fixation mécanique symbolisée par les axes (17) qui permettent d'appliquer une précontrainte de compression dans la masse de la composition élastomérique de la couche entre-lames (18) de la paire de lames flexibles composites (14) qui en est munie, lorsque l'entretoise (16) correspondante présente une épaisseur inférieure à celle de ladite couche entre-lames (18).

La vue 6c décrit un cas intermédiaire, où le calcul de rigidité du dispositif élastique de tension conduit à un solide parallélépipédique déformable dont les grandes faces sont constituées de trois (ou un nombre impair supérieur) lames flexibles composites (14), de conception analogue.

La figure 6c représente la disposition dans laquelle la lame flexible composite unique (14u) est intégrée au bloc porte-palier (12) ; au contraire, la paire de lames flexibles composites (14p), solidarisées entre elles par assemblage mécanique au moyen d'une entretoise (16) et un jeu de boulons ou rivets est fixée, par ce moyen mécanique, au bloc porte-palier (12), selon l'axe (17).

Selon les exigences de l'application, la paire de lames flexibles composites (14p) peut également comporter un élément d'amortissement visco-élastique des vibrations du lien souple, sous la forme d'une couche entre-lames en composition élastomérique intimement liée aux deux lames flexibles composites qui l'encadrent.

La vue 6d illustre un solide parallélépipédique déformable dans lequel les grandes faces sont constituées d'un couple de lames flexibles composites (14v) présentant une épaisseur variable, par exemple amincies dans la région centrale, afin d'homogénéiser les contraintes en tous points de chacune des lames flexibles composites (14v).

Une telle configuration desdites lames flexibles composites (14v) est réalisable par laminage contrôlé dans le cas où les lames flexibles composites (14v) sont réalisées en composite alterné de feuilles métalliques et de couches minces en composition élastomérique.
Elle est réalisable par moulage dans le cas où les lames flexibles composites (14v) sont réalisées en matériau composite constitué d'une matrice polymérique renforcée de fibres longues orientées monodirectionnellement.

Ainsi, dans une réalisation préférentielle, les lames flexibles composites (14) sont constituées d'un matériau composite, à matrice polymérique thermoplastique ou thermodurcissable imprégnant des fibres longues, textiles ou métalliques.
Pour répondre aux exigences de l'application, le module élastique de traction-compression du matériau composite doit être compris entre 30 et 150 GPa et préférentiellement entre 35 et 80 GPa.
Par ailleurs, en raison des contraintes subies en service, le matériau composite doit présenter un allongement à la rupture au moins égal à 1 % de sa longueur initiale.

Il n'est, par contre, pas nécessaire que le matériau composite présente de caractéristique thermique particulière, son utilisation se faisant dans un environnement thermique compatible avec la nature polymérique du matériau constitutif de sa matrice.

Il est bien connu que les caractéristiques mécaniques, et particulièrement le module d'élasticité, d'un matériau composite à fibres longues sont essentiellement régies par trois paramètres, à savoir les propriétés mécaniques des fibres, leur proportion pondérale ou volumique et leur orientation dans le matériau composite.

La réponse du matériau composite aux sollicitations externes est dictée en grande partie par le comportement élastique et plastique des éléments constitutifs et est la composante des réactions mécaniques du matériau de la matrice et de celui des fibres longues.

Parmi les matériaux polymériques susceptibles de constituer la matrice, peuvent être avantageusement retenus - parmi les polymères thermoplastiques - les polyoléfines, les polyesters, les polyamides et les polyimides, et, - parmi les polymères thermodurcissables - les résines epoxy, les résines phénoliques et formo-phénoliques.
Les polyoléfines présentent, cependant, l'inconvénient de nécessiter des traitements particuliers pour assurer leur adhérence aux fibres longues, cette liaison intime de la matrice aux fibres étant une caractéristique essentielle pour le comportement mécanique du matériau composite, dont les performances sont considérablement abaissées dès que se produit le démouillage de la fibre dans la matrice.

Les fibres utilisables comme éléments de renfort de la matrice seront choisies pour satisfaire les exigences de l'utilisation, parmi celles présentant un allongement à la rupture au moins égal à 1 %.

Elles doivent, en outre, présenter un module élastique compris entre 30 et 400 GPa, puisque c'est le module élastique des fibres longues qui régit, en grande partie, le module élastique du matériau composite.

C'est ainsi que seront, avantageusement, retenues les fibres d'alcool polyvinylique, de module élastique légèrement supérieur à 30 GPa, les fibres de verre dont le module élastique est compris, selon les qualités, entre 40 et 90 GPa, les fibres d'aramide, qui présentent un module élastique de 70 à 130 GPa, ou certaines fibres métalliques, telles que l'aluminium, dont le module élastique est de l'ordre de 70 à 80 GPa.

Les fibres de carbone, employées seules, présentent un module élastique un peu élevé et seront préférentiellement utilisées sous forme de fibres hybrides carbone/verre, dont la gamme des modules élastiques est très étendue.

Un autre facteur important pour les performances du matériau composite constitutif des lames flexibles composites (14) est la proportion de fibres.

Pour les contraintes de l'application, et compte tenu de la nature du matériau polymérique de la matrice et de celle des fibres, les proportions volumiques de fibres par rapport à l'ensemble du composite sont comprises entre 40 et 80 % et, préférentiellement, entre 60 et 70 %.

Les propriétés des matériaux composites sont, également, fonction de l'orientation des fibres dans la matrice. Pour les contraintes de l'application, une orientation des fibres comprises entre -8° et +8° par rapport à l'axe longitudinal des lames flexibles composites (14) et, préférentiellement, entre -5 et + 5° s'est avérée satisfaisante.

Parmi les matériaux composites ainsi réalisés, peuvent être cités, à titre d'exemples non limitatifs, comme ayant présenté les performances les meilleures, les combinaisons matrice/fibres suivantes :
- dans la gamme de module élastique de 30 à 50 GPa, des composites constitués d'une matrice polyester et de 60 % en volume de fibres aramide ou d'une matrice époxy et 66 % en volume de fibre de verre S.
- dans la gamme de module élastique de 50 à 80 GPa, des composites constitués d'une matrice époxy et 73 % en volume de fibre de verre E ou d'une matrice polyimide et 64 % en volume de fibres aramide.
- dans la gamme de module élastique de 80 à 100 GPa, des composites à matrice phénolique et 40 % en volume de fibres d'aramide ou à matrice époxy et 58 % en volume de fibres hybrides carbone/verre.

La flexibilité de la matrice est une caractéristique secondaire mais qui peut être ajustée, au besoin, par exemple par combinaison de polymères compatibles, pour former des alliages polymériques. Dans le cas des matrices époxy, la flexibilité est aisément ajustée par combinaison, dans les proportions appropriées, de résines époxy rigides et souples. Le module élastique de traction-compression du matériau composite ainsi réalisé est utilisé dans l'assemblage ultérieur des composants.

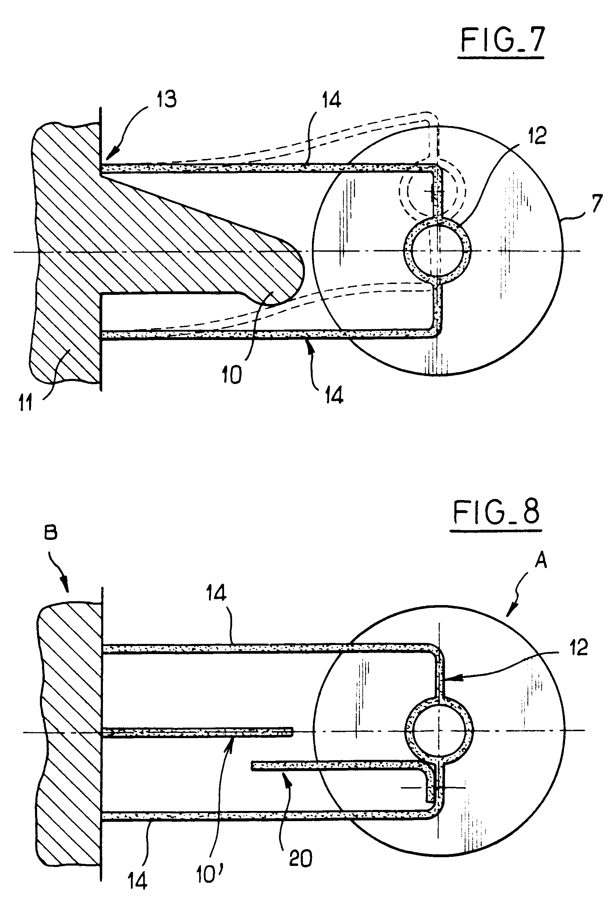

La figure 7 schématise la disposition d'une butée de limitation mécanique de flexibilité (10), agissant par entrée en contact, brutale ou progressive, sur une des lames flexibles composites (14) du solide parallélépipédique déformable où le bloc porte-palier (12) lui est complètement intégré, ne formant qu'une seule pièce avec les deux lames flexibles composites (14).

Le principe d'une telle entrée en contact, au delà d'une zone fonctionnelle à grande flexibilité sensiblement constante, est également applicable au cas où les grandes faces du solide parallélépipédique déformable comportent une ou deux paires desdites lames flexibles composites (14).

Après le contact mécanique de la butée de limitation mécanique de flexibilité sur une lame flexible composite (14) qui lui est contigüe, la déformation élastique du solide parallélépipédique déformable demeure possible en présentant une rigidité nettement plus élevée.
Ce phénomène modifie alors la fréquence de résonance susceptible de se produire dans certaines conditions de charge et de régime du moteur, en général assez voisines du régime de ralenti. Une rigidité élastique de rappel dans le dispositif élastique de tension, devenue deux à trois fois plus élevée que dans les débuts de course, intervient alors opportunément pour faire passer le système masse-ressort constitué par le lien souple d'une fréquence propre à une autre.

La position de fonctionnement, avec ou sans amortissement visco-élastique intégré - sous forme de couche entre-lames en composition élastomérique, par exemple - selon les exigences de l'application, est avantageusement située au voisinage immédiat de l'entrée en contact de la butée de limitation mécanique de flexibilité (10).

Dans une variante non représentée, où l'amortissement des vibrations du lien souple est assuré par le bloc élastomérique (15) occupant tout ou partie de la section libre des lames flexibles composites (14), il est nécessaire de reporter à l'extérieur du solide parallélépipédique déformable la butée de limitation mécanique de flexibilité (10), dont l'entrée en contact se fait alors sur l'extérieur d'une lame composite élastique (14).

Dans un cas comme dans l'autre, la butée de limitation mécanique de flexibilité (10), disposée intérieurement ou extérieurement au solide parallélépipédique déformable, agit non comme limiteur de course mais comme élément de modulation de la fréquence propre.

La figure 8 est une variante du dispositif élastique de tension dans laquelle une butée de correction mécanique de flexibilité (10') présente, elle-même, une possibilité de flexion.
Pour ce faire, elle présente des caractéristiques de flexibilité semblables à celles des lames flexibles composites (14) et est avantageusement réalisée dans le même matériau composite, comme l'élément antagoniste (20) sur lequel ladite butée de correction mécanique de flexibilité vient, en fonctionnement, prendre appui.

Après l'entrée en contact de la butée de correction mécanique de flexibilité (10') sur son élément antagoniste (20), entrée en contact qui se fait dans des zones non soumises à la flexion et donc peu fragiles, la rigidité du solide parallélépipédique déformable devient deux à trois fois plus élevée que dans les débuts de course, suivant les caractéristiques géométriques des lames flexibles composites (14), de la butée de correction mécanique de flexibilité (10') et de son élément antagoniste (20).

Comme dans les variantes décrites en figure 7, la butée de correction mécanique de flexibilité (10') et son élément antagoniste (20) agissent non comme limiteurs de course mais comme éléments de modulation de la fréquence propre.

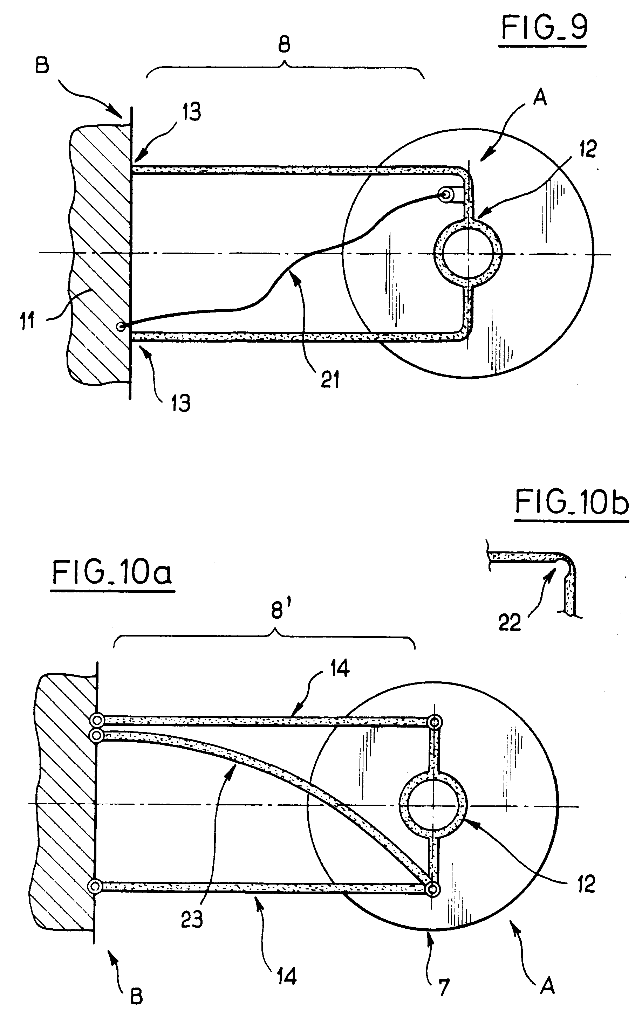

La figure 9 présente une autre réalisation possible pour assurer un accroissement de la rigidité du solide parallélépipédique déformable au delà de la position normale de fonctionnement du dispositif élastique de tension (8).

Cet accroissement de rigidité est obtenu par la mise en tension d'une longueur de cable (21), textile ou métallique, à haute résistance, et qui se trouve non tendue, dans le solide parallélépipédique déformable, au début de la course de déformation.
Les deux extrémités de ladite longueur de cable (21) sont représentées schématiquement liées d'une part au bloc porte-palier (12), pour l'extrémité mobile (A), d'autre part à la fixation réglable (11), pour l'extrémité fixe (B), ici symbolisée par une paroi rigide incorporant les encastrements (13).
La liaison des extrémités de la longueur de cable (21) à ces deux points d'ancrage est réalisée soit par pincement, dans un montage mécanique, soit par solidarisation, l'ancrage étant noyé lors du moulage des composants.
Le module d'élasticité propre de la longueur de cable (21) est choisi pour que, lorsqu'elle se trouve tendue au delà de la position normale de fonctionnement, la rigidité puisse doubler ou tripler sa valeur de début de course.
Cet effet modifie notablement la fréquence de résonance du système masse-ressort constitué par le lien souple à certains régimes caractéristiques du moteur, sans qu'une butée rigide vienne exercer des contraintes brutales sur ledit lien souple.

La figure 10 concerne une autre configuration d'un dispositif élastique de tension (8'), rendu à grande flexibilité par insertion d'une lame flexible oblique (23) dans le solide parallélépipédique déformable.
Cette disposition est particulièrement intéressante lorsqu'il est souhaitable que la force soit exercée sur le lien souple par la poussée (P) du solide parallélépipédique déformable présentant une très grande flexibilité, autorisant en conséquence une résonance du système masse-ressort, constitué par le lien souple, à bas régime, très en deçà du ralenti du moteur, par exemple.

Les vibrations se trouvent, de ce fait, filtrées dans la totalité des régimes utiles du moteur, sans nécessité d'amortissement visco-élastique additionnel.

Un dispositif élastique de tension (8'), à force approximativement constante, est en fait rendu réalisable avec des rigidités d'encastrement abaissées.

Dans la variante représentée en figure 10 a, les quatre faces du solide parallélépipédique déformable sont raccordées par quatre articulations semi-encastrées.
Selon les besoins de l'application, deux ou quatre desdites articulations semi-encastrées jouent un rôle de charnières relativement souples, les autres, dans le cas où deux seulement jouent ce rôle, constituant des encastrements rigides.

Un moyen de réaliser une telle charnière relativement souple est détaillé en vue 10b.
Il est constitué par une réduction locale de l'épaisseur (22) par rapport à celle des lames flexibles composites (14) sur toute la largeur de celles-ci.
Une lame flexible oblique (23), préférentiellement réalisée en même matériau composite que les lames flexibles composites articulées (14) est insérée dans le solide parallélépipédique déformable, les extrémités de ladite lame flexible oblique (23) étant articulées par des moyens analogues.
La déformabilité de ladite lame flexible élastique (23) par raccourcissement de l'entraxe entre ses deux extrémités est mise à profit pour corriger l'élasticité linéaire des déformations du solide parallélépipédique déformable et rendre la rigidité de l'ensemble très faible, voire nulle - une valeur négative étant même possible sur une course limitée - le dispositif élastique de tension (8') se trouvant donc à force sensiblement constante dans toute la course utile.

La souplesse en rotation des articulations semi-encastrées, par exemple obtenues par les réductions de l'épaisseur (22), ne nuit pas à la raideur de l'ensemble du dispositif dans le sens orthogonal à la figure, raideur qui assure le guidage du galet tendeur (7) dans les directions différentes de celle parcourue pas sa trajectoire élastique.

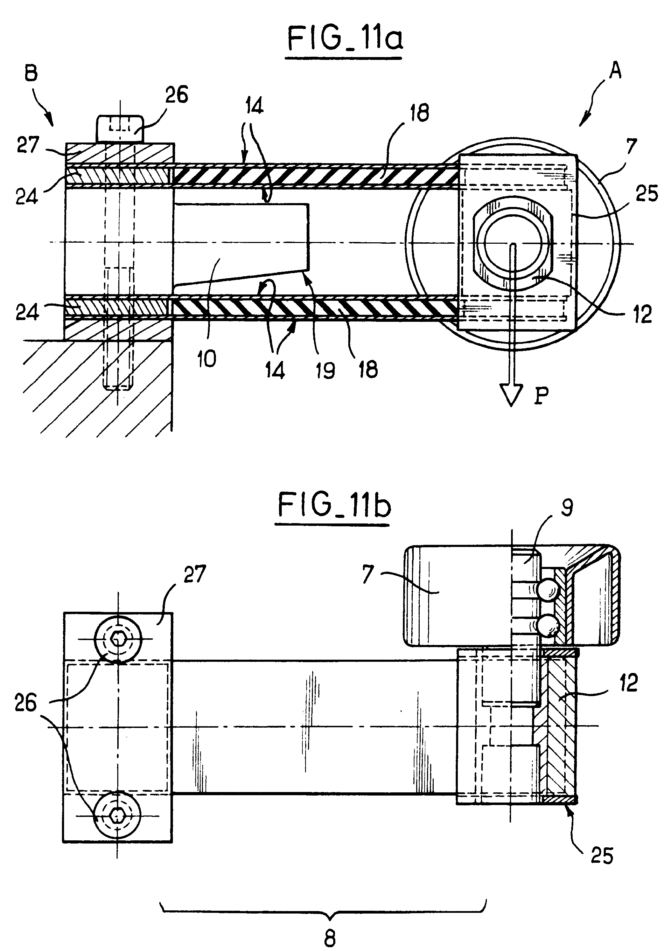

La figure 11 décrit, en coupe axiale et vue partielle, le dispositif élastique (8), représenté monté, mais en l'absence de la déflexion chargée d'assurer la pression élastique sur le dos du lien souple, dont le solide parallélépipédique déformable est constitué pour ses grandes faces, d'un couple de deux paires de lames flexibles composites (14) comportant chacun un élément d'amortissement visco-élastique des vibrations du lien souple, sous la forme d'une couche entre-lames (18) en composition élastomérique.

La vue 11a est la coupe par le plan de symétrie des lames flexibles composites (14).

La vue 11b est une vue de dessus avec coupe partielle du palier (9) du galet tendeur, et du galet tendeur (7), montrant le principe du montage.

Le galet tendeur (7) est un galet lisse, existant en dimensions standard dans le commerce, monté par deux roulements à billes ou à aiguilles sur le palier (9) emmanché à force dans un alésage cylindrique du bloc porte-palier (12).
Ledit bloc porte-palier (12) est enserré, au moment de l'assemblage, dans un empilage constitué des quatre lames flexibles composites (14) et des deux cales-entretoises (24). A l'extrémité mobile (A), le serrage est réalisé par sertissage d'un collier rectangulaire (25) enserrant le tout et assurant la précontrainte nécessaire de l'assemblage. La même fonction pourrait être assurée par un collage structural de l'ensemble.

En effet, la réalisation du bloc porte-palier (12) comme celle de la butée de limitation mécanique de flexibilité (10) peuvent être envisagées en alliage léger, à fixation préférentiellement mécanique, ou en bloc de polymères thermoplastiques ou thermodurcissables dont le collage intégrant les cales-entretoises (24) constitue alors une solution plus homogène.
A l'extrémité fixe (B) est représenté un assemblage démontable par deux boulons extérieurs (26), encadrants, avec une plaque de serrage (27) assurant le pincement de la butée de limitation mécanique de flexibilité (10).
Le montage sur le carter du moteur s'opère par l'intermédiaire de la fixation réglable (11) par tout moyen approprié, non représenté.

Il est bien évident, pour l'homme de l'art, que chaque type de serrage, - démontable ou non - est applicable à l'extrémité fixe (B) comme à l'extrémité mobile (A) des lames flexibles composites (14). Dans un cas comme dans l'autre, les cales-entretoises (24), étant d'épaisseur inférieure à celle de la couche entre-lames (18), en composition élastomérique, adhérisée aux deux lames flexibles composites (14) qui l'encadrent, peuvent être montées avec un jeu à l'état libre.

Le nombre de lames flexibles composites nécessaires, dans un empilage à faces parallèles, est déterminé par les données mécaniques de l'application.
Dans un exemple de réalisation pratique, une déflexion de l'ordre de 20 millimètres exerçant une poussée de 45 daN constitue l'objectif.
Une réalisation en lames d'acier à ressort nécessiterait, pour la même application, un nombre considérable de lames très minces, par exemple une centaine de lames de 0,25 millimètres d'épaisseur, séparées par de minces couches de composition élastomérique.

Il en résulterait une rigidité torsionnelle trop basse, sous l'effet de l'excentrage parasite dû au montage du galet tendeur, latéralement à l'empilage des lames d'acier.

L'angle élastiquement pris par le palier du galet tendeur, qui peut être éventuellement rattrapé par le montage ou par la forme des lames d'acier, reste cependant proportionnel à la déflexion élastique ; lors des variations de celle-ci, les variations de l'angle seraient alors rédhibitoires pour un bon centrage du lien souple (1).

L'encastrement en couple de deux ensembles d'une cinquantaine de lames d'acier chacun encadrant le bloc porte-palier (12) et la butée de limitation mécanique de flexibilité (10), constituerait le moyen de porter la rigidité de torsion à la valeur nécessaire, mais le dispositif ainsi constitué serait lourd, encombrant et coûteux à fabriquer.

Au contraire, le dimensionnement d'une réalisation en lames flexibles composites, par exemple à matrice polymérique renforcée de fibres longues, permet le choix d'un nombre de lames égal à quatre et une rigidité torsionnelle tout à fait admissible pour un module élastique en traction-compression du matériau composite au moins égal à 30 GPa.

D'autre part, la disposition, par couple de part et d'autre du bloc porte-palier (12) et de la butée de limitation mécanique de flexibilité (10) de paires de lames flexibles composites (14) autorise l'aménagement commode d'un amortissement par cisaillement d'une couche entre-lames (18), en composition élastomérique, disposée entre elles et intimement liée par voie physico-chimique auxdites lames flexibles composites (14). Il en résulte des avantages spécifiques, d'allègement et de facilité de réalisation ainsi que d'amortissement.

Le sandwich constitué des lames flexibles composites (14) et de la couche entre-lames (18) peut, dans une variante non représentée, être constitué de trois lames flexibles composites (14) et deux couches entre-lames (18), ce qui s'avère nécessaire dans les applications où la poussée (P) doit être plus élevée.

L'adaptation, par réglage de la hauteur des cales-entretoises (24), permet l'ajustement de la précontrainte de compression de la composition élastomérique de la couche entre-lames (18), du moins près de l'encastrement, puisque la forme et, donc, le parallélisme des lames flexibles composites (14) est modifiée par la flexion.

Lors de ladite flexion parallèle des lames flexibles composites (14) à extrémités encastrées, un cisaillement du matériau élastomérique de la couche entre-lames (18) participe à la déformation en y apportant un surcroît de rigidité qui reste, cependant, très modéré. Par contre, les variations nécessairement cycliques de ces déformations font intervenir à plein la viscoélasticité de la composition élastomérique qui les constitue.

La précontrainte de compression apporte, en outre, un effet hystérétique qui s'avère non négligeable, surtout étant donné que la composition élastomérique supporte une contrainte de cisaillement très modérée par rapport à son potentiel.

Du fait de la nature des lames flexibles composites (14) et des contraintes peu élevées, favorables au choix d'une composition élastomérique très amortissante, la disposition très simple d'un tel sandwich apporte au dispositif élastique de tension (8) un amortissement visco-élastique satisfaisant pour lutter contre les variations cycliques de la tension élastique du lien souple.

En particulier, un taux d'amortissement visco-élastique compris entre 7 % et 16 % de l'amortissement critique s'avère suffisant pour éviter les entrées en résonance des brins du lien souple encadrant le galet tendeur (7), assez courts sur cette application, ceci limitant le risque de vibrations entre les différentes poulies provoquées par la variation cyclique de la puissance transmise aux accessoires.

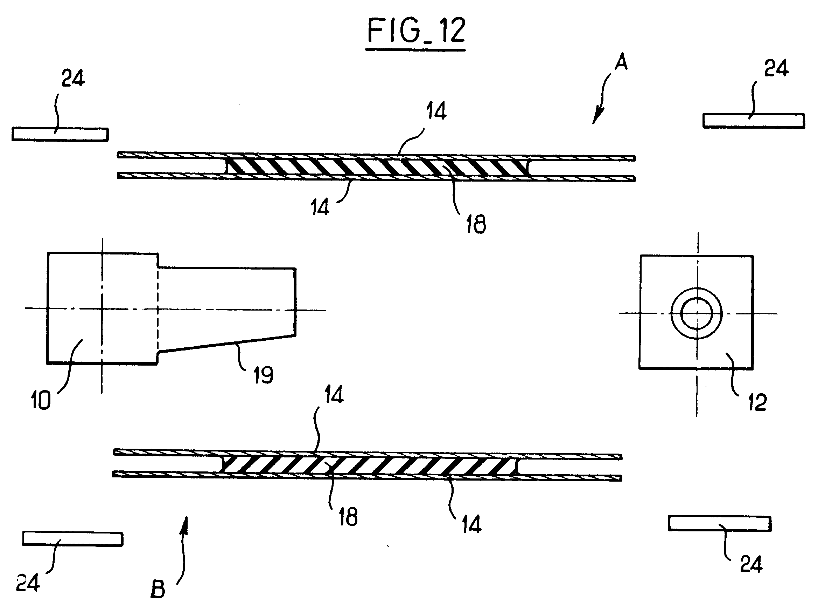

La figure 12 représente une vue extérieure des pièces, à l'état libre, composants de l'ensemble du dispositif élastique de tension (8), précédemment présenté assemblé. Ledit dispositif élastique de tension (8) est constitué, essentiellement, de deux ensembles identiques, formés chacun d'une paire de lames flexibles composites (14) associées par liaison intime physico-chimique à une couche entre-lames (18), en composition élastomérique.

Sont présentées, sous forme d'éclaté, les cales-entretoise (24), qui peuvent être identiques à l'extrémité mobile (A) et à l'extrémité fixe (B), où elles permettent les encastrements des lames flexibles composites (14) par simple pincement, en A, du bloc porte-palier (12) et, en B, de la butée de limitation mécanique de flexibilité (10).

La forme extérieure de ladite butée de limitation mécanique de flexibilité (10) lui donne pour fonction une entrée en contact par sa face oblique (19) avec la lame flexible composite (14) la plus proche, lorsque la course élastique dépasse une valeur usuelle.
Son effet est d'accroître la rigidité, grâce à la déformation restée possible de la moitié du dispositif élastique de tension (8) située à l'extrémité mobile (A) ; la déformation de la moitié des lames flexibles composites (14), du côté de l'extrémité fixe (B) se trouve alors plafonnée après l'entrée en contact de ladite butée de limitation mécanique de flexibilité (10).

Ainsi, dans des débattements dynamiques correspondant à une entrée en résonance vibratoire du lien souple (1), une rigidification non brutale fait apparaître une nouvelle fréquence propre, favorisant l'étouffement par amortissement viscoélastique du système résonant, entre deux limites géométriques encadrant l'entrée en contact d'une lame flexible composite (14) avec la butée de limitation mécanique de flexibilité (10). Des formes plus arrondies permettent, si besoin est, une variation progressive de la rigidité. Les risques de torsion élastique autour de l'axe longitudinal du dispositif élastique de tension (8) sont également limités par cette entrée en contact qui, en cas de torsion variable, commencerait par le bord de la lame flexible composite (14) concernée.

Dans un exemple d'application, les quatre lames flexibles composites (14) présentent un module élastique de traction-compression au moins égal à 30 GPa et, préférentiellement, de l'ordre de 45 GPa, une longueur utile de 80 millimètres, une largeur de 38 millimètres et une épaisseur chacune de 1,2 millimètre.

L'épaisseur de la couche entre-lames (18), en composition élastomérique, est de 4,6 millimètres en service pour 5 millimètres à l'état libre, soit une précontrainte de 8 % .

L'écartement entre les deux paires de lames flexibles composites (14) est de 30 millimètres, soit 37 millimètres entre leurs centres de torsion, grandeur utile pour le calcul de l'inertie qui s'oppose au vrillage. En effet, chaque lame flexible composite (14) agit de chant par sa rigidité transversale nécessairement élevée.

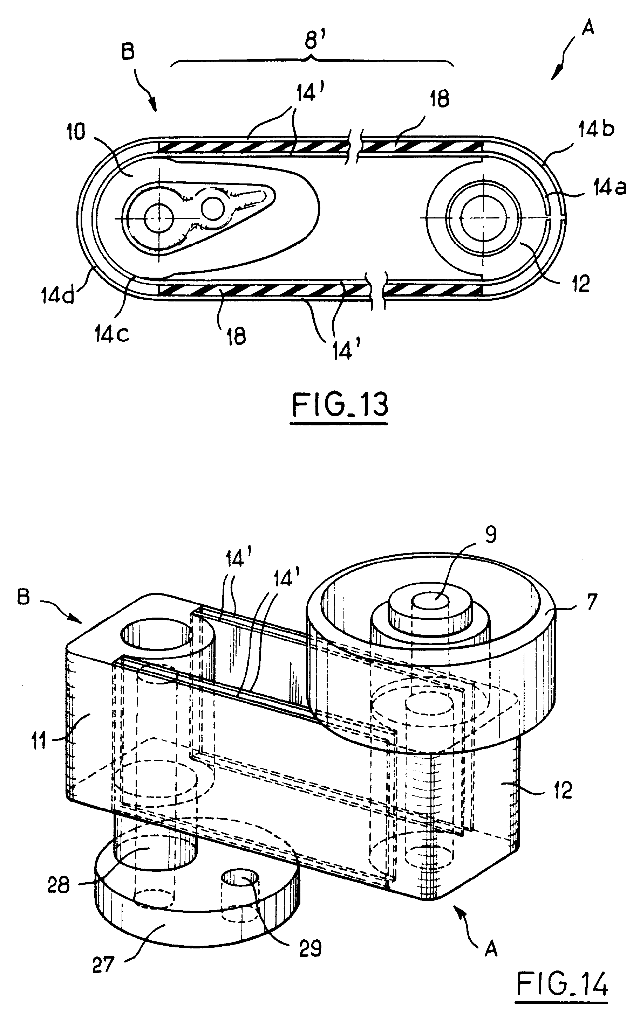

La figure 13 représente, toujours en vue extérieure, une variante de réalisation d'un dispositif élastique de tension (8') assurant la même fonction.

Les lames flexibles composites (14') ont leur partie utile rectiligne à l'état de repos et intimement liée à la couche entre-lames (18), en composition élastomérique.

La partie droite de la figure représente, du côté de l'extrémité mobile (A) des lames flexibles composites (14'), l'encastrement de demi-anneaux non jonctionnés (14a) et (14b) dans le bloc porte-palier (12), alors constitué d'un matériau polymérique, de préférence thermoplastique, qu'ils entourent partiellement.
La couche entre-lames (18) en composition élastomérique qui est intimement liée aux lames flexibles composites (14'), dans leur partie rectiligne, se trouve remplacée, dans les parties courbes, par le matériau constitutif dudit bloc porte-palier (12), qu'enserrent lesdites parties courbes et qui maintient constant l'écartement des lames flexibles composites (14') et assure, avec ou sans précontrainte, le confinement de la couche entre-lames (18).

La partie gauche de la figure représente, à l'extrémité fixe (B) des lames flexibles composites (14'), l'encastrement de l'un des côtés d'anneaux fermés (14c) et (14d), monoblocs, dans la butée de limitation mécanique de flexibilité (10), alors constituée d'un matériau polymérique, de préférence thermoplastique, que ledit côté des anneaux fermés (14c) et (14d) entoure partiellement.
La couche entre-lames (18) se trouve remplacée, dans ces zones courbes, par le matériau constitutif de la butée de limitation mécanique de flexibilité (10) - identique ou différent de celui constitutif du bloc porte-palier (12) -. Ladite butée de limitation mécanique de flexibilité (10) qu'enserrent les zones courbes maintient, également constant, l'écartement des lames flexibles composites (14') et assure, avec ou sans précontrainte, le confinement de la couche entre-lames (18), en composition élastomérique dans la partie déformable.

Il est bien évident, pour l'homme de l'art, que la disposition en demi-anneaux non jonctionnés (14a) et (14b) est utilisable dans l'encastrement de l'extrémité fixe (B) des lames composites flexibles (14') dans la butée de limitation mécanique de flexibilité (10), comme la disposition en anneaux fermés (14c) et (14d), dans l'encastrement de l'extrémité mobile (A) dans le bloc porte-palier (12).

La figure 14 est une vue perspective d'une réalisation matérielle conforme à la description de la figure qui précède.

A l'extrêmité mobile (A) le bloc porte-palier (12) est constitué d'un matériau polymérique moulé qui intègre totalement l'extrêmité des quatre lames flexibles composites (14').

Le palier (9) portant le galet tendeur (7) par l'intermédiaire des roulements appropriés est rendu solidaire du bloc porte-palier (12), par exemple par emmanchement forcé d'un axe dans un alésage de celui-ci.

A l'extrêmité fixe (B), les extrêmités des quatre lames flexibles (14') sont également intimement intégrées par moulage dans un bloc polymérique formant fixation réglable (11).

Le principe du réglage est indiqué par l'existence d'une plaque de serrage (27) qui tourillonne sur un axe de fixation au carter (28), le réglage sur boutonnière étant assuré par boulonnage dans l'alésage (29).
L'alésage (29) peut bien sûr servir au support d'une butée de limitation ou de correction mécanique de flexibilité (non représentée), brutale ou progressive.

Un procédé de fabrication du dispositif élastique de tension selon l'invention comporte, après la réalisation du matériau composite constitutif des lames flexibles composites, une étape de réalisation du sandwich lames flexibles composites/ couche entre-lames en composition élastomérique et une étape d'assemblage.

La réalisation en plaques du matériau composite, dans la variante préférentielle, consiste en une imprégnation par une matrice polymérique, à l'état fluide ou pâteux, des fibres longues alignées et disposées selon l'angle choisi, éventuellement en nappes multiples.

La matrice polymérique peut être alors réticulée, par traitement thermique sous une pression modérée destinée à assurer le compactage des constituants, la réticulation de ladite matrice pouvant être partielle ou totale.

Les lames flexibles composites sont alors découpées aux dimensions voulues par l'application dans les plaques du matériau composite ainsi réalisé.

Dans une opération ultérieure, destinée à confectionner les sandwiches, les lames flexibles composites sont encollées ou adhérisées, en vue de leur liaison intime, par réaction physico-chimique, en moule clos, sous pression et avec apport calorique éventuel, avec la composition élastomérique de la couche entre-lames. Cette réaction physico-chimique s'opère simultanément à la vulcanisation de ladite composition élastomérique.

Dans une variante de réalisation des sandwiches, les lames flexibles composites seulement partiellement réticulées sont introduites, avec ou sans adhérisation selon la nature de la matrice, dans le moule où se produit alors une co-réticulation de ladite matrice et de la composition élastomérique de la couche entre-lames, conduisant également à la liaison intime des composants.

L'étape suivante est l'assemblage qui diffère selon la variante du dispositif élastique de tension.

Dans le cas d'un assemblage mécanique, le bloc porte-palier et la butée de limitation mécanique de flexibilité sont préalablement réalisés, par moulage ou usinage des matériaux appropriés.

Indépendamment, les cales-entroises sont positionnées entre les lames flexibles composites, dans la partie où celles-ci sont dépourvues de la couche entre-lames, en composition élastomérique.
Leur serrage assure l'encastrement desdites lames flexibles composites éventuellement de la butée de correction mécanique de flexibilité ainsi que de son élément antagoniste et la précontrainte de la couche entre-lames.

Le sertissage d'un collier rectangulaire métallique vient alors enserrer l'ensemble sandwiches/cales-entretoises, de part et d'autre du bloc porte-palier et de la butée de limitation mécanique de flexibilité.

Un montage mécanique par boulons extérieurs sur une plaque de serrage peut se substituer au sertissage du collier rectangulaire métallique, lorsque des boutonnières de positionnement sont nécessaires à l'application.

Dans les variantes utilisant un bloc porte-palier et/ou une butée de limitation mécanique de flexibilité en matériau polymérique, un procédé économique permet la réalisation de chacune de ces pièces, simultanément à leur assemblage avec les sandwiches lames flexibles composites/couche entre-lames en composition élastomérique.
Pour ce faire, les extrémités des demi-anneaux non jonctionnés ou un côté des anneaux fermés sont positionnés dans le moule portant l'empreinte du bloc porte-palier ou de la butée de limitation mécanique de flexibilité.

Est alors injecté, à l'état fluide ou pâteux, le matériau polymérique constitutif qui se solidifie au contact des parois du moule, en prenant la forme de l'empreinte et en venant noyer, dans sa masse, les extrémités des demi-anneaux non jonctionnés ou le côté des anneaux fermés. Le moule est conçu de manière telle que la pression mise en oeuvre dans le moulage par injection se répartisse de façon à assurer par confinement la précontrainte de la composition élastomérique dans la couche entre-lames.

Quel que soit son mode de fabrication, le dispositif élastique de tension, objet de l'invention, présente, par rapport aux dispositifs connus de l'art antérieur, les avantages suivants :
- un moindre encombrement, grâce à une réalisation sous forme compacte ;
- un allègement, d'une part, de l'ensemble du dispositif grâce à l'emploi de matériaux de masse volumique faible par rapport à celle des composants usuels, et, aussi, l'allégement des masses dynamiquement mobiles, réduisant ainsi les accélérations transmises par le lien souple ;
- une combinaison avantageuse de caractéristiques,
   * une structure de réalisation simple permettant d'assurer, sans tourillonnement, toutes les fonctions de guidage du galet tendeur, par le solide parallélépipédique déformable,
   * une disposition permettant l'intégration d'un amortissement sans friction, de valeur assurée pendant toute la vie du véhicule et, de surcroît, éventuellement réglable indépendamment du réglage de la tension sur le lien souple,
   * et un rappel élastique de la poussée sur le lien souple, assuré par la déformation des lames flexibles composites et contrôlé, au delà de la zone usuelle de fonctionnement, par l'entrée en jeu, éventuellement progressive, de la butée de limitation ou de correction mécanique de flexibilité.

## Revendications

1. Dispositif de tension pressant élastiquement un galet tendeur (7) sur un lien souple (1) de transmission fonctionnant par adhérence mécanique, constitué d'un ressort intégrant éventuellement un moyen d'amortissement, caractérisé en ce que la pression (P) sur ledit lien souple (1) est exercée par la déformabilité élastique d'un solide parallélépipédique déformable constituant ledit ressort et dont les grandes faces sont formées d'un couple de lames flexibles composites (14), (14'), maintenues parallèles, écartées, par encastrement de leurs extrémités dans une fixation enserrant un bloc porte-palier (12) à l'extrémité mobile (A) portant un galet tendeur (7), l'encastrement de l'extrémité fixe (B) à la fixation réglable (11) sur le carter du moteur portant éventuellement un moyen de modifier, sur une partie de la course élastique, la flexibilité du dispositif élastique de tension (8), (8').

2. Dispositif de tension pressant élastiquement un galet tendeur (7) sur un lien souple (1) de transmission selon la revendication 1, caractérisé en ce que les grandes faces du solide parallélépipédique déformable sont constituées par un couple de lames flexibles composites (14), uniques.

3. Dispositif de tension pressant élastiquement un galet tendeur (7) sur un lien souple (1) de transmission selon la revendication 1, caractérisé en ce que l'une au moins des grandes faces du solide parallélépipédique déformable est constituée d'au moins deux lames flexibles composites (14) maintenues parallèles par interposition de cales entretoises (24).

4. Dispositif de tension pressant élastiquement un galet tendeur (7) sur un lien souple (1) de transmission selon la revendication 3, caractérisé en ce que l'une des grandes faces du solide parallélépipédique déformable est constituée d'une seule lame flexible composite (14), l'autre grande face étant constituée d'une paire de lames flexibles composites (14) maintenues parallèles par interposition de cales entretoises (24).

5. Dispositif de tension pressant élastiquement un galet tendeur (7) sur un lien souple (1) de transmission selon la revendication 3, caractérisé en ce que l'une des grandes faces du solide parallélépipédique déformable est constituée d'une seule lame flexible composite (14), l'autre grande face étant constituée de trois lames flexibles composites (14) maintenues parallèles par interposition de cales entretoises (24).

6. Dispositif de tension pressant élastiquement un galet tendeur (7) sur un lien souple (1) de transmission selon la revendication 3, caractérisé en ce que chacune des grandes faces du solide parallélépipédique déformable est constituée d'une paire de lames flexibles composites (14) maintenues parallèles par interposition de cales entretoises (24).

7. Dispositif de tension pressant élastiquement un galet tendeur (7) sur un lien souple (1) de transmission selon la revendication 3, caractérisé en ce que l'une des grandes faces du solide parallélépipédique déformable est constituée d'une paire de lames flexibles composites (14), l'autre grande face étant constituée d'un ensemble de trois lames flexibles composites (14), les lames flexibles composites (14) de chacune des grandes faces étant maintenues parallèles entre elles par insertion de cales entretoises (24).

8. Dispositif de tension pressant élastiquement un galet tendeur (7) sur un lien souple (1) de transmission, selon l'une des revendications 1 à 7, caractérisé en ce que chacune des lames flexibles composites (14) est constitué d'un matériau composite présentant un module élastique de traction-compression au moins égal à 30 GPa et au plus égal à 220 GPa.

9. Dispositif de tension pressant élastiquement un galet tendeur (7) sur un lien souple (1) de transmission selon la revendication 8, caractérisé en ce que chacune des lames flexibles composites (14) est constituée d'une alternance multicouche de feuilles minces, métalliques ou en matériau polymérique flexible, et de couches minces en composition élastomérique auxquelles elles sont intimement liées.

10. Dispositif de tension pressant élastiquement un galet tendeur (7) sur un lien souple (1) de transmission selon la revendication 8, caractérisé en ce que chacune des lames flexibles composites (14) est réalisée en un matériau composite comportant une matrice polymérique renforcée de fibres longues à haute résistance, ledit matériau composite présentant un module élastique de traction-compression au plus égal à 150 GPa.

11. Dispositif de tension pressant élastiquement un galet tendeur (7) sur un lien souple (1) de transmission selon la revendication 10, caractérisé en ce que la matrice polymérique du matériau composite constitutif des lames flexibles composites (14) est un polymère thermoplastique, tel qu'une polyoléfine, une polyimide, une polyamide ou un polyester.

12. Dispositif de tension pressant élastiquement un galet tendeur (7) sur un lien souple (1) de transmission selon la revendication 10, caractérisé en ce que la matrice polymérique du matériau composite constitutif des lames flexibles composites (14) est un polymère thermodurcissable, tel qu'une résine époxy, une résine phénolique ou une résine formo-phénolique.

13. Dispositif de tension pressant élastiquement un galet tendeur (7) sur un lien souple (1) de transmission selon la revendication 10, caractérisé en ce que le module élastique de traction des fibres longues de renforcement de la matrice polymérique du matériau composite constitutif des lames flexibles composites (14) est compris entre 35 et 400 GPa.

14. Dispositif de tension pressant élastiquement un galet tendeur (7) sur un lien souple (1) de transmission selon la revendication 13, caractérisé en ce que les fibres longues de renforcement de la matrice polymérique du matériau composite constitutif des lames flexibles composites (14) sont des textiles à haute résistance, tels que des fibres d'alcool polyvinylique, d'aramide, de verre ou de carbone ou encore des fibres hybrides.

15. Dispositif de tension pressant élastiquement un galet tendeur (7) sur un lien souple (1) de transmission selon la revendication 13, caractérisé en ce que les fibres longues de renforcement de la matrice polymérique du matériau composite constitutif des lames flexibles composites (14) sont des fils ou fibres métalliques.

16. Dispositif de tension pressant élastiquement un galet tendeur (7) sur un lien souple (1) de transmission selon l'une des revendications 10 à 15, caractérisé en ce que la proportion volumique des fibres de renforcement par rapport à l'ensemble du matériau composite est compris entre 40 % et 80 % et, préférentiellement, entre 60 % et 70 % .

17. Dispositif de tension pressant élastiquement un galet tendeur (7) sur un lien souple (1) de transmission selon l'une des revendications 10 à 16, caractérisé en ce que l'orientation monodirectionnelle des fibres longues de renforcement de la matrice polymérique du matériau composite constitutif des lames flexibles composites (14) est comprise entre -8° et +8°, et préférentiellement entre -5° et +5° par rapport à l'axe longitudinal desdites lames flexibles composites (14).

18. Dispositif de tension pressant élastiquement un galet tendeur (7) sur un lien souple (1) de transmission, selon l'une des revendications 10 à 17, caractérisé en ce que le matériau composite constitutif des lames flexibles composites comporte une matrice en résine époxy renforcée de fibres de verre longues dont la proportion volumique est comprise entre 60 % et 70 % du volume total du matériau composite.

19. Dispositif de tension pressant élastiquement un galet tendeur (7) sur un lien souple (1) de transmission selon l'une des revendications 1 ou 3 à 10, caractérisé en ce qu'une couche entre-lames (18), en composition élastique amortissante est insérée entre deux lames flexibles composites (14) de l'une au moins des grandes faces du solide parallélépipédique déformable, pour apporter au dispositif élastique de tension (8) un effet d'amortissement des vibrations du lien souple (1).

20. Dispositif de tension pressant élastiquement un galet tendeur (7) sur un lien souple (1) de transmission selon la revendication 19, caractérisé en ce que la couche entre-lames (18) est intimement liée aux lames flexibles composites (14) qui l'encadrent.

21. Dispositif de tension pressant élastiquement un galet tendeur (7) sur un lien souple (1) de transmission selon l'une des revendications 19 ou 20, caractérisé en ce que la composition élastomérique amortissante de la couche entre-lames (18) procure au dispositif élastique de tension (8) un taux d'amortissement visco-élastique compris entre 7 % et 16 % de l'amortissement critique.

22. Dispositif de tension pressant élastiquement un galet tendeur (7) sur un lien souple (1) de transmission selon l'une des revendications 19 à 21, caractérisé en ce qu'une précontrainte de compression est imposée à la composition élastomérique amortissante de la couche entre-lames (18) par utilisation d'un jeu d'entretoises (16) d'épaisseur inférieure à celle de ladite couche entre-lames (18) lorsqu'elle se trouve à l'état libre, ladite précontrainte de compression apportant à l'amortissement du dispositif élastique de tension (8) un effet hystérétique additionnel.

23. Dispositif de tension pressant élastiquement un galet tendeur (7) sur un lien souple (1) de transmission selon l'une des revendications 1 à 10 et 19 à 22, caractérisé en ce qu'est intégré au solide parallélépipédique déformable un moyen d'amortissement des vibrations dudit lien souple (1), constitué d'un bloc élastomérique (15), occupant au moins une partie du volume ménagé entre les lames flexibles composites qui l'encadrent.

24. Dispositif de tension pressant élastiquement un galet tendeur (7) sur un lien souple (1) de transmission selon la revendication 23, caractérisé en ce que le bloc élastomérique (15) occupe la totalité du volume ménagé entre les lames flexibles composites (14) qui l'encadrent.

25. Dispositif de tension pressant élastiquement un galet tendeur (7) sur un lien souple (1) de transmission selon la revendication 24, caractérisé en ce que le bloc élastomérique (15) qui occupe la totalité du volume ménagé entre les lames flexibles composites (14) qui l'encadrent est intimement lié auxdites lames flexibles composites (14).

26. Dispositif de tension pressant élastiquement un galet tendeur (7) sur un lien souple (1) de transmission selon la revendication 23, caractérisé en ce que le bloc élastomérique (15) occupe partiellement le volume ménagé entre les lames flexibles composites (14) auxquelles il est intimement lié sur les zones de contact.

27. Dispositif de tension pressant élastiquement un galet tendeur (7) sur un lien souple (1) de transmission selon l'une des revendications 1 à 10, caractérisé en ce qu'il comporte un moyen de modifier, sur une partie de la course élastique, la flexibilité du dispositif de tension élastique (8).

28. Dispositif de tension pressant élastiquement un galet tendeur (7) sur un lien souple (1) de transmission selon la revendication 27, caractérisé en ce que ledit moyen de modifier, sur une partie de la course élastique, la flexibilité du dispositif élastique de tension (8) est constitué d'une butée de limitation mécanique de flexibilité (10) disposée sur la fixation réglable (11) sur le carter du moteur.

29. Dispositif de tension pressant élastiquement un galet tendeur (7) sur un lien souple (1) de transmission selon la revendication 28, caractérisé en ce que ladite butée de limitation mécanique de flexibilité (10) disposée sur la fixation réglable (11), est placée intérieurement au solide parallélépipédique déformable, son entrée en contact se produisant sur la face interne d'une lame composite flexible (14).

30. Dispositif de tension pressant élastiquement un galet tendeur (7) sur un lien souple (1) de transmission selon la revendication 28, caractérisé en ce que ladite butée de limitation mécanique de flexibilité (10) disposée sur la fixation réglable (11), est placée extérieurement au solide parallélépipédique déformable, son entrée en contact se produisant sur la face externe d'une lame flexible composite (14).

31. Dispositif de tension pressant élastiquement un galet tendeur (7) sur un lien souple (1) de transmission selon la revendication 27, caractérisé en ce que le moyen de modifier, sur une partie de la course élastique, la flexibilité du dispositif élastique de tension (8) est constitué d'une butée de correction mécanique de flexibilité (10') associée à un élément antogoniste (20) sur lequel se produit son entrée en contact, disposés intérieurement au solide parallélépipédique déformable, la butée de correction mécanique de flexibilité (10') étant portée par la fixation réglable (11), l'élément antagoniste (20) étant porté par le bloc porte-palier (12).

32. Dispositif de tension pressant élastiquement un galet tendeur (7) sur un lien souple (1) de transmission selon la revendication 31, caractérisé en ce que la butée de correction mécanique de flexibilité (10') et l'élément antagoniste (20) sont réalisés dans le matériau composite constitutif des lames flexibles composites (14).

33. Dispositif de tension pressant élastiquement un galet tendeur (7) sur un lien souple (1) de transmission selon la revendication 27, caractérisé en ce que le moyen de modifier, sur une partie de la course élastique, la flexibilité du dispositif élastique de tension (8) est constitué par une longueur de cable (21) dont les extrémités sont pincées où noyées dans le(s) matériau(x) constitutif(s) du bloc porte-palier (12) et de la fixation réglable (11), la mise en tension de ladite longueur de cable (21) provoquant l'accroissement de la rigidité de rappel élastique du dispositif élastique de tension (8).

34. Dispositif de tension pressant élastiquement un galet tendeur (7) sur un lien souple (1) de transmission selon la revendication 33, caractérisé en ce que la longueur de cable (21) est constituée de fibres textiles telle que du polyamide, du polyester, de la fibre d'aramide ou d'alcool polyvinylique.

35. Dispositif de tension pressant élastiquement un galet tendeur (7) sur un lien souple (1) de transmission selon la revendication 33, caractérisé en ce que la longueur de cable (21) est constituée d'un fil ou cable métallique.

36. Dispositif de tension pressant élastiquement un galet tendeur (7) sur un lien souple (1) de transmission selon la revendication 27, caractérisé en ce que le moyen de modifier, sur une partie de la course élastique, la flexibilité du dispositif élastique de tension (8') est constitué d'une lame flexible oblique (23) insérée dans le solide parallélépipédique déformable dont deux au moins des extrémités sont raccordées par des articulations semi-encastrées, les extrémités de ladite lame flexible oblique (23) étant raccordées de façon analogue, et sa fonction étant d'abaisser la rigidité dudit dispositif élastique de tension (8'), par raccourcissement de son entraxe.

37. Dispositif de tension pressant élastiquement un galet tendeur (7) sur un lien souple (1) de transmission selon la revendication 36, caractérisé en ce que les articulations semi-encastrées du solide parallélépipédique déformable sont constituées d'une réduction locale de l'épaisseur (22) sur toute la largeur des lames flexibles composites (14), jouant le rôle de charnière relativement souple.

38. Dispositif de tension pressant élastiquement un galet tendeur (7) sur un lien souple (1) de transmission selon l'une des revendications 1 à 37, caractérisé en ce que chaque lame flexible composite (14), constituant d'une grande face du solide parallélépipédique déformable est d'épaisseur constante sur toute sa largeur.

39. Dispositif de tension pressant élastiquement un galet tendeur (7) sur un lien souple (1) de transmission selon l'une des revendications 1 à 37, caractérisé en ce qu'au moins une lame flexible composite (14v), constituant d'une grande face du solide parallélépipédique déformable est d'épaisseur variable, l'amincissement étant préférentiellement situé dans la zone centrale.

40. Dispositif de tension pressant élastiquement un galet tendeur (7) sur un lien souple (1) de transmission selon l'une des revendications 1 à 39, caractérisé en ce que la fixation des composants est réalisée par un serrage assurant l'encastrement de l'une des extrémités mobile (A) ou fixe (B), enserrant l'une le bloc porte-palier (12), l'autre la fixation réglable (11), obtenu par le sertissage d'un collier rectangulaire (25).

41. Dispositif de tension pressant élastiquement un galet tendeur (7) sur un lien souple (1) de transmission selon l'une des revendications 1 à 39, caractérisé en ce que la fixation des composants est réalisée par un serrage assurant l'encastrement de l'une des extrémités mobile (A) ou fixe (B), enserrant l'une le bloc porte-palier (12), l'autre la fixation réglable (11), obtenu par deux boulons encadrants (26) avec une plaque de serrage (27).

42. Dispositif de tension pressant élastiquement un galet tendeur (7) sur un lien souple (1) de transmission selon l'une des revendications 1 à 39, caractérisé en ce que la fixation des composants est réalisée par un serrage assurant l'encastrement de l'une des extrémités mobile (A) ou fixe (B), enserrant l'une le bloc porte-palier (12), l'autre la fixation réglable (11), obtenu par collage structural des composants.

43. Dispositif de tension pressant élastiquement un galet tendeur (7) sur un lien souple (1) de transmission selon l'une des revendications 28 ou 29, caractérisé en ce que la fixation des composants est réalisée par intégration des extrémités d'anneaux non jonctionnés (14a) et (14b) au cours du moulage du matériau polymérique constituant le bloc porte-palier (12) ou la butée de limitation mécanique de flexibilité (10), assurant de ce fait l'encastrement de l'une des extrémités mobile (A) ou fixe (B).

44. Dispositif de tension pressant élastiquement un galet tendeur (7) sur un lien souple (1) de transmission selon l'une des revendications 28 ou 29, caractérisé en ce que la fixation des composants est réalisée par intégration de l'un des côtés des anneaux fermés (14c), (14d), au cours du moulage du matériau polymérique constituant le bloc porte-palier (12) ou la butée de limitation mécanique de flexibilité (10), assurant de ce fait l'encastrement de l'une des extrémités mobile (A) ou fixe (B).

## Patentansprüche

1. Spannvorrichtung, die elastisch eine Spannrolle (7) auf einen flexiblen Treibriemen (1) drückt, der durch mechanische, von einer Feder hervorgerufene Reibung funktioniert, zu der möglicherweise ein Dämpfungsmittel gehört,
dadurch gekennzeichnet, daß der Druck (P) auf den Treibriemen (1) durch die elastische Verformbarkeit eines die Feder bildenden, verformbar ausgebildeten parallelepipedischen Körpers ausgeübt wird, dessen große Seiten von einem flexiblen Paar Verbundplatten (14), (14') gebildet sind, die durch Einspannen ihrer Enden in einer Halterung parallel beabstandet gehalten werden, die am eine Spannrolle (7) tragenden freien Ende (A) ein Blocktraglager (12) einschließt, wobei die Halterung des festen Endes (B) an der verstellbaren Befestigung (11) auf dem Motorengehäuse festgelegt ist, die ggf. ein Mittel zur Änderung der Flexibilität der elastischen Spannvorrichtung (8), (8') auf einem Teil des Federungsweges trägt.

2. Spannvorrichtung, die elastisch eine Spannrolle (7) auf einen flexiblen Treibriemen (1) drückt, nach Anspruch 1, dadurch gekennzeichnet, daß die Hauptseiten des verformbaren parallelepipedischen Körpers durch ein Paar flexibler Verbundplatten (14) gebildet sind.

3. Spannvorrichtung, die elastisch eine Spannrolle (7) auf einen flexiblen Treibriemen (1) drückt, dadurch gekennzeichnet, daß mindestens eine der Hauptseiten des verformbaren parallelepipedischen Körpers von mindestens zwei flexiblen Verbundplatten (14) gebildet ist, die durch Einfügung von Zwischenstücken (24) parallel gehalten sind.

4. Spannvorrichtung, die elastisch eine Spannrolle (7) auf einen flexiblen Treibriemen (1) drückt, nach Anspruch 3, dadurch gekennzeichnet, daß die eine der Hauptseiten des verformbaren parallelepipedischen Körpers von einer einzigen flexiblen Verbundplatte (14) gebildet ist, wobei die andere Hauptseite von einer Paar flexibler Verbundplatten (14) gebildet ist, die durch Einfügung von Zwischenstücken (24) parallel gehalten sind.

5. Spannvorrichtung, die elastisch eine Spannrolle (7) auf einen flexiblen Treibriemen (1) drückt, nach Anspruch 3, dadurch gekennzeichnet, daß eine der Hauptseiten des verformbaren parallelepipedischen Körpers von einer einzigen flexiblen Verbundplatte (14) gebildet ist und die andere Hauptseite von drei flexiblen Verbundplatten, die durch Einschalten von Zwischenstücken (24) parallel gehalten sind.

6. Spannvorrichtung, die elastisch eine Spannrolle (7) auf einen flexiblen Treibriemen (1) drückt, nach Anspruch 3, dadurch gekennzeichnet, daß jede der Hauptseiten des verformbaren parallelepipedischen Körpers von einem Paar flexibler Verbundplatten (14) gebildet ist, die durch Einfügen von Zwischenstücken (24) parallel gehalten sind.

7. Spannvorrichtung, die elastisch eine Spannrolle (7) auf einen flexiblen Treibriemen (1) drückt, nach Anspruch 3, dadurch gekennzeichnet, daß die eine der Hauptseiten des verformbaren parallelepipedischen Körpers von einem Paar flexibler Verbundplatten (14) gebildet ist und die andere Hauptseite von einem Satz von drei flexiblen Verbundplatten (14), wobei die flexiblen Verbundplatten (14) jeder Hauptseite durch Einfügen von Zwischenstücken (24) zwischen diese parallel gehalten sind.

8. Spannvorrichtung, die elastisch eine Spannrolle (7) auf einen flexiblen Treibriemen (1) drückt, nach einem der Ansprüche 1 bis 7, dadurch gekennzeichnet, daß jede der flexiblen Verbundplatten (14) aus einem Verbundwerkstoff gebildet ist, der ein Zug-Druck-Elastizitätsmodul von mindestens 30 GPa und höchstens 220 GPa aufweist.

9. Spannvorrichtung, die elastisch eine Spannrolle (7) auf einen flexiblen Treibriemen (1) drückt, nach Anspruch 8, dadurch gekennzeichnet, daß jede der flexiblen Verbundplatten (14) aus einer Vielschicht-Wechselfolge metallischer oder aus flexiblem Polymerwerkstoff bestehender dünner Folien und dünner Lagen aus einer Elastomerverbindung, über die sie eng verbunden sind, gebildet ist.

10. Spannvorrichtung, die elastisch eine Spannrolle (7) auf einen flexiblen Treibriemen (1) drückt, nach Anspruch 8, dadurch gekennzeichnet, daß jede der flexiblen Verbundplatten (14) aus einem Verbundwerkstoff besteht, der eine mit langen Fasern hoher Festigkeit verstärkte Polymermatrix aufweist, wobei dieser Werkstoffverbund ein Zug-Druck-Elastizitätsmodul von höchstens 150 GPa aufweist.

11. Spannvorrichtung, die elastisch eine Spannrolle (7) auf einen flexiblen Treibriemen (1) drückt, nach Anspruch 10, dadurch gekennzeichnet, daß die Polymermatrix des Verbundwerkstoffs der flexiblen Verbundplatten (14) ein thermoplastisches Polymer ist, wie Polyolefin, Polyimid, Polyamid oder Polyester.

12. Spannvorrichtung, die elastisch eine Spannrolle (7) auf einen flexiblen Treibriemen (1) drückt, nach Anspruch 10, dadurch gekennzeichnet, daß die Polymermatrix des Grundverbundwerkstoffs der flexiblen Verbundplatten (14) ein duroplastisches Polymer ist, wie Epoxyharz, Phenolharz oder Formaldehydharz.

13. Spannvorrichtung, die elastisch eine Spannrolle (7) auf einen flexiblen Treibriemen (1) drückt, nach Anspruch 10, dadurch gekennzeichnet, daß das Zug-Elastizitätsmodul der langen Verstärkungsfasern der Polymermatrix des Grundverbundwerkstoffs der flexiblen Verbundplatten (14) zwischen 35 und 400 GPa liegt.

14. Spannvorrichtung, die elastisch eine Spannrolle (7) auf einen flexiblen Treibriemen (1) drückt, nach Anspruch 13, dadurch gekennzeichnet, daß die langen Verstärkungsfasern der Polymermatrix des Grundverbundwerkstoffs der flexiblen Verbundplatten (14) Textilien mit hoher Festigkeit sind, wie Polyvinylalkoholfasern, Aramidfasern, Glasfasern oder Kohlefasern oder auch Hybridfasern.

15. Spannvorrichtung, die elastisch eine Spannrolle (7) auf einen flexiblen Treibriemen (1) drückt, nach Anspruch 13, dadurch gekennzeichnet, daß die langen Verstärkungsfasern der Polymermatrix des Grundverbundwerkstoffs der flexiblen Verbundplatten (14) metallische Fäden oder Fasern sind.

16. Spannvorrichtung, die elastisch eine Spannrolle (7) auf einen flexiblen Treibriemen (1) drückt, nach einem der Ansprüche 10 bis 15, dadurch gekennzeichnet, daß das Volumenverhältnis der Verstärkungsfasern im Verhältnis zu dem Gesamtverbundwerkstoff zwischen 40 % und 80 % liegt, vorzugsweise zwischen 60 % und 70 %.

17. Spannvorrichtung, die elastisch eine Spannrolle (7) auf einen flexiblen Treibriemen (1) drückt, nach einem der Ansprüche 10 bis 16, dadurch gekennzeichnet, daß die einseitig ausgerichtete Orientierung der langen Verstärkungsfasern der Polymermatrix des Grundverbundwerkstoffs der flexiblen Verbundplatten (14) zwischen -8° und +8°, vorzugsweise zwischen -5° und +5°, in bezug zur Längsachse der flexiblen Verbundplatten (14) liegt.

18. Spannvorrichtung, die elastisch eine Spannrolle (7) auf einen flexiblen Treibriemen (1) drückt, nach einem der Ansprüche 10 bis 17, dadurch gekennzeichnet, daß der Grundverbundwerkstoff der flexiblen Verbundplatten aus einer Matrix aus Epoxyharz besteht, die mit langen Glasfasern verstärkt ist, deren Volumenverhältnis zwischen 60 % und 70 % des gesamten Volumens des Verbundwerkstoffs liegt.

19. Spannvorrichtung, die elastisch eine Spannrolle (7) auf einen flexiblen Treibriemen (1) drückt, nach einem der Ansprüche 1 oder 3 bis 10, dadurch gekennzeichnet, daß eine Zwischenplattenschicht (18) aus einer elastischen Zusammensetzung zwischen zwei flexiblen Verbundplatten (14) von mindestens einer der Hauptseiten des verformbaren parallelepipedischen Körpers eingefügt ist, um mit der elastischen Spannvorrichtung (8) eine Dämpfungswirkung für Vibrationen des Treibriemens (1) zu erzielen.

20. Spannvorrichtung, die elastisch eine Spannrolle (7) auf einen flexiblen Treibriemen (1) drückt, nach Anspruch 19, dadurch gekennzeichnet, daß die Zwischenplattenschicht (18) mit den flexiblen Verbundplatten (14), die sie schließen, fest verbunden ist.

21. Spannvorrichtung, die elastisch eine Spannrolle (7) auf einen flexiblen Treibriemen (1) drückt, nach einem der Ansprüche 19 oder 20, dadurch gekennzeichnet, daß die dämpfende Elastomerzusammensetzung der Zwischenplattenschicht (18) einen viskoelastischen Dämpfungsgrad in der Spannvorrichtung (8) verleiht, der zwischen 7 % und 16 % der kritischen Dämpfung liegt.

22. Spannvorrichtung, die elastisch eine Spannrolle (7) auf einen flexiblen Treibriemen (1) drückt, nach einem der Ansprüche 19 bis 21, dadurch gekennzeichnet, daß eine Druckvorspannung auf die dämpfende Elastomerzusammensetzung der Zwischenplattenschicht (18) durch Verwendung eines Zwischenstücksatzes (16) kleinerer Stärke als die der Zwischenplattenschicht (18) angelegt ist, wenn sie sich im unbelasteten Zustand befindet, wobei die Druckvorspannung bei der Dämpfung der elastischen Spannvorrichtung (8) eine zusätzliche Hysteresewirkung erzeugt.

23. Spannvorrichtung, die elastisch eine Spannrolle (7) auf einen flexiblen Treibriemen (1) drückt, nach einem der Ansprüche 1 bis 10 und 19 bis 22, dadurch gekennzeichnet, daß an dem verformbaren parallelepipedischen Körper ein Vibrationsdämpfungsmittel für den Treibriemen (1) eingefügt ist, das durch einen Elastomerblock (15) gebildet ist, der mindestens einen Teil des Volumens einnimmt, das zwischen den flexiblen Verbundplatten, die es einschließen, gebildet ist.

24. Spannvorrichtung, die elastisch eine Spannrolle (7) auf einen flexiblen Treibriemen (1) drückt, nach Anspruch 23, dadurch gekennzeichnet, daß der Elastomerblock (15) das gesamte Volumen einnimmt, das zwischen den flexiblen Verbundplatten (14), die es einschließen, gebildet ist.

25. Spannvorrichtung, die elastisch eine Spannrolle (7) auf einen flexiblen Treibriemen (1) drückt, nach Anspruch 24, dadurch gekennzeichnet, daß der Elastomerblock (15), der das ganze Volumen einnimmt, das zwischen den flexiblen Verbundplatten (14) gebildet ist, die es einschließen, fest mit den flexiblen Verbundplatten (14) verbunden ist.

26. Spannvorrichtung, die elastisch eine Spannrolle (7) auf einen flexiblen Treibriemen (1) drückt, nach Anspruch 23, dadurch gekennzelchnet, daß der Elastomerblock (15) teilweise das Volumen einnimmt, das zwischen den flexiblen Verbundplatten (14) gebildet ist, mit denen er im Kontaktbereich fest verbunden ist.

27. Spannvorrichtung, die elastisch eine Spannrolle (7) auf einen flexiblen Treibriemen (1) drückt, nach einem der Ansprü- che 1 bis 10, dadurch gekennzeichnet, daß sie auf einem Teil des Federungsweges ein Mittel zur Änderung der Flexibilität der elastischen Spannvorrichtung (8) enthält.

28. Spannvorrichtung, die elastisch eine Spannrolle (7) auf einen flexiblen Treibriemen (1) drückt, nach Anspruch 27, dadurch gekennzeichnet, daß das Mittel zur Änderung der Flexibilität der elastischen Spannvorrichtung (8) auf einem Teil des Federungsweges von einem Anschlag zur mechanischen Flexibilitätsbegrenzung (10) gebildet ist, der auf der verstellbaren Befestigung (11) auf dem Motorengehäuse angeordnet ist.

29. Spannvorrichtung, die elastisch eine Spannrolle (7) auf einen flexiblen Treibriemen (1) drückt, nach Anspruch 28, dadurch gekennzeichnet, daß die mechanische Flexibilitätsbegrenzung (10), die auf der verstellbaren Befestigung (11) angeordnet ist, innerhalb des verformbaren parallelepipedischen Körpers vorgesehen ist, wobei sein Kontaktanschlag auf der inneren Fläche einer flexiblen Verbundplatte (14) stattfindet.

30. Spannvorrichtung, die elastisch eine Spannrolle (7) auf einen flexiblen Treibriemen (1) drückt, nach Anspruch 28, dadurch gekennzeichnet, daß die mechanische Flexibilitätsbegrenzung (10), die auf der verstellbaren Befestigung (11) angeordnet ist, außerhalb des verformbaren parallelepipedischen Körpers angeordnet ist, wobei sein Kontaktanschlag auf der äußeren Fläche einer flexiblen Verbundplatte (14) stattfindet.

31. Spannvorrichtung, die elastisch eine Spannrolle (7) auf einen flexiblen Treibriemen (1) drückt, nach Anspruch 27, dadurch gekennzeichnet, daß das Mittel zur Änderung der Flexibilität der elastischen Spannvorrichtung (8) auf einem Teil des Federungsweges von einem mechanischen Flexibilitätskorrekturanschlag (10') gebildet wird, der einem Gegenelement (20) zugeordnet ist, mit dem er in Berührung gelangt und der innerhalb des verformbaren parallelepipedischen Körpers angeordnet ist, wobei der mechanische Flexibilitätskorrekturanschlag (10') durch die verstellbare Befestigung (11) getragen ist und das Gegenelement (20) durch das Blocktraglager (12).

32. Spannvorrichtung, die elastisch eine Spannrolle (7) auf einen flexiblen Treibriemen (1) drückt, nach Anspruch 31, dadurch gekennzeichnet, daß der mechanische Flexibilitätskorrekturanschlag (10') und das Gegenelement (20) aus dem Grundverbundwerkstoff der flexiblen Verbundplatten (14) bestehen.

33. Spannvorrichtung, die elastisch eine Spannrolle (7) auf einen flexiblen Treibriemen (1) drückt, nach Anspruch 27, dadurch gekennzeichnet, daß das Mittel zur Änderung der Flexibilität der elastischen Spannvorrichtung (8) auf einem Teil des Federungsweges durch eine Kabellänge (21) gebildet ist, deren Enden in dem(n) Grundwerkstoff(en) des Blocktraglagers (12) und der verstellbaren Befestigung (11) festgeklemmt oder eingelassen sind, wobei das Unterspannungssetzen der Kabellänge (21) die Erhöhung der elastischen Rückstellfestigkeit der elastischen Spannvorrichtung (8) einleitet.

34. Spannvorrichtung, die elastisch eine Spannrolle (7) auf einen flexiblen Treibriemen (1) drückt, nach Anspruch 33, dadurch gekennzeichnet, daß die Kabellänge (21) aus Textilfasern gebildet ist, z. B. aus Polyamid, aus Polyester, aus Aramidoder aus Polyvinylalkoholfasern.

35. Spannvorrichtung, die elastisch eine Spannrolle (7) auf einen flexiblen Treibriemen (1) drückt, nach Anspruch 33, dadurch gekennzeichnet, daß die Kabellänge (21) von einem metallischen Faden oder Kabel gebildet ist.

36. Spannvorrichtung, die elastisch eine Spannrolle (7) auf einen flexiblen Treibriemen (1) drückt, nach Anspruch 27, dadurch gekennzeichnet, daß das Mittel zur Änderung der Flexibilität der elastischen Spannvorrichtung (8') auf einem Teil des Federungsweges von einer flexiblen Querplatte (23) gebildet ist, die in dem verformbaren parallelepipedischen Körper eingefügt ist, von dem mindestens zwei Enden mit halbeingebetteten Gelenken verbunden sind, wobei die Enden der flexiblen Querplatte (23) in analoger Weise angeschlossen sind, deren Funktion es ist, die Festigkeit der elastischen Spannvorrichtung (8') durch Verkürzung ihrer Achsweite zu verringern.

37. Spannvorrichtung, die elastisch eine Spannrolle (7) auf einen flexiblen Treibriemen (1) drückt, nach Anspruch 36, dadurch gekennzeichnet, daß die halbeingebetteten Gelenke des verformbaren parallelepipedischen Körpers durch eine örtliche Dickenminderung (22) auf der ganzen Breite der flexiblen Verbundplatten (14) gebildet sind, die die Rolle verhältnismäßig nachgiebiger Scharniere spielen.

38. Spannvorrichtung, die elastisch eine Spannrolle (7) auf einen flexiblen Treibriemen (1) drückt, nach einem der Ansprüche 1 bis 37, dadurch gekennzeichnet, daß jede flexible Verbundplatte (14), die eine Hauptseite des verformbaren parallelepipedischen Körpers bildet, auf ihrer ganzen Breite eine konstante Dicke hat.

39. Spannvorrichtung, die elastisch eine Spannrolle (7) auf einen flexiblen Treibriemen (1) drückt, nach einem der Ansprüche 1 bis 37, dadurch gekennzeichnet, daß mindestens eine der flexiblen Verbundplatten (14v), die eine Hauptseite des verformbaren parallelepipedischen Körpers bildet, eine unterschiedliche Dicke aufweist, wobei die Verdünnung vorzugsweise im Mittenbereich gelegen ist.

40. Spannvorrichtung, die elastisch eine Spannrolle (7) auf einen flexiblen Treibriemen (1) drückt, nach einem der Ansprüche 1 bis 39, dadurch gekennzeichnet, daß die Befestigung der Bauteile durch eine Einspannung verwirklicht ist, die den Einschluß eines bewegbaren Endes (A) oder des festen Endes (B) durch die Einfassung eines rechteckigen Ringflansches (25) sichert, wobei das eine Ende das Blocktraglager (12) umschließt und das andere die verstellbare Befestigung (11).

41. Spannvorrichtung, die elastisch eine Spannrolle (7) auf einen flexiblen Treibriemen (1) drückt, nach einem der Ansprüche 1 bis 39, dadurch gekennzeichnet, daß die Befestigung der Bauteile durch eine Einspannung verwirklicht ist, die den Einschluß des einen bewegbaren Endes (A) oder des festen Endes (B) durch zwei Spannschrauben (26) mit einer Spannplatte (27) sichert, wobei das eine Ende das Blocktraglager (12) umschließt und das andere die verstellbare Befestigung (11).

42. Spannvorrichtung, die elastisch eine Spannrolle (7) auf einen flexiblen Treibriemen (1) drückt, nach einem der Ansprüche 1 bis 39, dadurch gekennzeichnet, daß die Befestigung der Bauteile durch eine Einspannung verwirklicht ist, die den Einschluß des einen bewegbaren Endes (A) oder des festen Endes (B) durch strukturelles Ankleben der Bauteile sichert, wobei das eine Ende das Blocktraglager (12) umschließt und das andere die verstellbare Befestigung (11).

43. Spannvorrichtung, die elastisch eine Spannrolle (7) auf einen flexiblen Treibriemen (1) drückt, nach einem der Ansprüche 28 oder 29, dadurch gekennzeichnet, daß die Festlegung der Bauteile durch im Lauf der Formgebung des Polymerwerkstoffs, der das Blocktraglager (12) oder die mechanische Flexibilitätsbegrenzung (10) bildet, erfolgendes Einbinden der Enden nichtzusammengefügter Ringe (14a) und (14b) stattfindet, wodurch der Einschluß des einen der Enden, nämlich des bewegbaren (A) oder festen (B) Endes, sichergestellt ist.

44. Spannvorrichtung, die elastisch eine Spannrolle (7) auf einen flexiblen Treibriemen (1) drückt, nach einem der Ansprüche 28 oder 29, dadurch gekennzeichnet, daß die Befestigung der Bauteile durch im Lauf der Formgebung des Polymerwerkstoffs, der das Blocktraglager (12) oder die mechanische Flexibilitätsbegrenzung (10) bildet, erfolgendes Einbinden der einen der Seiten geschlossener Ringe (14c), (14d) stattfindet, wodurch der Einschluß des einen der Enden, nämlich des bewegbaren (A) oder festen (B) Endes, sichergestellt ist.

## Claims

1. A tension device resiliently exerting pressure on a tension roller (7) against a flexible transmission link (1) operating by mechanical adhesion, composed of a spring possibly incorporating a dampening means, characterised in that pressure (P) on said flexible link (1) is exerted by the resilient deformability of a deformable parallelepipedic solid constituting said spring, the large faces of which are formed by a pair of composite flexible blades (14), (14'), held parallel and separate from one another by the embedding of their extremities in a fixing which tightly holds a bearing carrier unit (12) at the mobile end (A) carrying a tension roller (7), the embedding of the fixed extremity (B) in the adjustable fixing (11) on the engine housing possibly carrying a means for modifying the flexibility of the resilient tension device (8), (8') over part of the range of spring.

2. A tension device resiliently exerting pressure on a tension roller (7) against a flexible transmission link (1) according to Claim 1, characterised in that the large faces of the deformable parallelepipedic solid are composed of a pair of single composite flexible blades (14).

3. A tension device resiliently exerting pressure on a tension roller (7) against a flexible transmission link (1) according to Claim 1, characterised in that at least one of the large faces of the deformable parallelepipedic solid is composed of at least two composite flexible blades (14) held parallel by the interposition of brace blocks (24).

4. A tension device resiliently exerting pressure on a tension roller (7) against a flexible transmission link (1) according to Claim 3, characterised in that one of the large faces of the deformable parallelepipedic solid is composed of a single composite flexible blade (14), the other large face being composed of a pair of composite flexible blades (14) held parallel by the interposition of brace blocks (24).

5. A tension device resiliently exerting pressure on a tension roller (7) against a flexible transmission link (1) according to Claim 3, characterised in that one of the large faces of the deformable parallelepipedic solid is composed of a single composite flexible blade (14), the other large face being composed of three composite flexible blades (14) held parallel by the interposition of brace blocks (24).

6. A tension device resiliently exerting pressure on a tension roller (7) against a flexible transmission link (1) according to Claim 3, characterised in that each of the large faces of the deformable parallelepipedic solid is composed of a pair of composite flexible blades (14) held parallel by the inter-position of brace blocks (24).

7. A tension device resiliently exerting pressure on a tension roller (7) against a flexible transmission link (1) according to Claim 3, characterised in that one of the large faces of the deformable parallelepipedic solid is composed of a pair of composite flexible blades (14), the other large face being composed of an assembly of three composite flexible blades (14), the composite flexible blades (14) of each of the large faces being held parallel to one another by the insertion of brace blocks (24).

8. A tension device resiliently exerting pressure on a tension roller (7) against a flexible transmission link (1) according to Claims 1 to 7, characterised in that each of the composite flexible blades (14) is composed of a composite material having a modulus of elasticity in traction/compression at least equal to 30 GPa and at most equal to 220 GPa.

9. A tension device resiliently exerting pressure on a tension roller (7) against a flexible transmission link (1) according to Claim 8, characterised in that each of the composite flexible blades (14) is composed of a multi-layer alternation of thin sheets made of metal or a flexible polymeric material, and of thin layers made of elastomeric composition to which they are intimately linked.

10. A tension device resiliently exerting pressure on a tension roller (7) against a flexible transmission link (1) according to Claim 8, characterised in that each of the composite flexible blades (14) is made of a composite material comprising a polymeric matrix reinforced with long, high-resistance fibres, said composite material having a modulus of elasticity in traction/compression at most equal to 150 GPa.

11. A tension device resiliently exerting pressure on a tension roller (7) against a flexible transmission link (1) according to Claim 10, characterised in that the polymeric matrix of the composite material constituting the composite flexible blades (14) is a thermoplastic polymer, such as a polyolefin, a polyimide, a polyamide or a polyester.

12. A tension device resiliently exerting pressure on a tension roller (7) against a flexible transmission link (1) according to Claim 10, characterised in that the polymeric matrix of the composite material constituting the composite flexible blades (14) is a thermosetting polymer, such as an epoxy resin, a phenolic resin or a formo-phenolic resin.

13. A tension device resiliently exerting pressure on a tension roller (7) against a flexible transmission link (1) according to Claim 10, characterised in that the modulus of elasticity in traction of the long fibres reinforcing the polymeric matrix of the composite material constituting the composite flexible blades (14) is comprised between 35 and 400 GPa.

14. A tension device resiliently exerting pressure on a tension roller (7) against a flexible transmission link (1) according to Claim 13, characterised in that the long fibres reinforcing the polymeric matrix of the composite material constituting the composite flexible blades (14) are high-resistance textiles, such as polyvinyl alcohol, aramid, glass or carbon fibres or else hybrid fibres.

15. A tension device resiliently exerting pressure on a tension roller (7) against a flexible transmission link (1) according to Claim 13, characterised in that the long fibres reinforcing the polymeric matrix of the composite material constituting the composite flexible blades (14) are wires or metal fibres.

16. A tension device resiliently exerting pressure on a tension roller (7) against a flexible transmission link (1) according to one of Claims 10 to 15, characterised in that the proportion by volume of the reinforcing fibres relative to the composite material as a whole is comprised between 40% and 80% and, preferably, between 60% and 70%.

17. A tension device resiliently exerting pressure on a tension roller (7) against a flexible transmission link (1) according to one of Claims 10 to 16, characterised in that the mono-directional orientation of the long fibres reinforcing the polymeric matrix of the composite material constituting the composite flexible blades (14) is comprised between -8° and +8°, and preferably between -5° and +5° relative to the longitudinal axis of said composite flexible blades (14).

18. A tension device resiliently exerting pressure on a tension roller (7) against a flexible transmission link (1) according to one of Claims 10 to 17, characterised in that the composite material constituting the composite flexible blades comprises a matrix of epoxy resin reinforced with long glass fibres, the proportion by volume of which is comprised between 60% and 70% of the total volume of the composite material.

19. A tension device resiliently exerting pressure on a tension roller (7) against a flexible transmission link (1) according to one of Claims 1 or 3 to 10, characterised in that an inter-blade layer (18), made of dampening resilient composition, is inserted between two composite flexible blades (14) of at least one of the large faces of the deformable parallelepipedic solid to give the resilient tension device (8) an effect of dampening the vibrations of the flexible link (1).

20. A tension device resiliently exerting pressure on a tension roller (7) against a flexible transmission link (1) according to Claim 19, characterised in that the inter-blade layer (18) is intimately linked to the composite flexible blades (14) enclosing it.

21. A tension device resiliently exerting pressure on a tension roller (7) against a flexible transmission link (1) according to one of Claims 19 or 20, characterised in that the dampening elastomeric composition of the inter-blade layer (18) gives the resilient tension device (8) a rate of viscoelastic dampening comprised between 7% and 16% of critical dampening.

22. A tension device resiliently exerting pressure on a tension roller (7) against a flexible transmission link (1) according to one of Claims 19 to 21, characterised in that compressive prestressing is imposed on the dampening elastomeric composition of the inter-blade layer (18) by using a set of braces (16) of a thickness less than that of said inter-blade layer (18) when it is in the free state, said compressive prestressing giving an additional hysteretic effect to the dampening of the resilient tension device (8).

23. A tension device resiliently exerting pressure on a tension roller (7) against a flexible transmission link (1) according to one of Claims 1 to 10 and 19 to 22, characterised in that a means of dampening the vibrations in said flexible link (1), composed of an elastomeric block (15) occupying at least part of the volume provided between the composite flexible blades enclosing it, is incorporated into the deformable parallelepipedic solid.

24. A tension device resiliently exerting pressure on a tension roller (7) against a flexible transmission link (1) according to Claim 23, characterised in that the elastomeric block (15) occupies all of the volume provided between the composite flexible blades (14) enclosing it.

25. A tension device resiliently exerting pressure on a tension roller (7) against a flexible transmission link (1) according to Claim 24, characterised in that the elastomeric block (15) occupying all of the volume provided between the composite flexible blades (14) which enclose it is intimately linked to said composite flexible blades (14).

26. A tension device resiliently exerting pressure on a tension roller (7) against a flexible transmission link (1) according to Claim 23, characterised in that the elastomeric block (15) partially occupies the volume provided between the composite flexible blades (14) to which it is intimately linked at the contact zones.

27. A tension device resiliently exerting pressure on a tension roller (7) against a flexible transmission link (1) according to one of Claims 1 to 10, characterised in that it comprises a means of modifying the flexibility of the resilient tension device (8) over part of the range of spring.

28. A tension device resiliently exerting pressure on a tension roller (7) against a flexible transmission link (1) according to Claim 27, characterised in that said means of modifying the flexibility of the resilient tension device (8) over part of the range of spring is composed of a mechanical flexibility-limiting stop (10) disposed on the adjustable fixing (11) on the engine housing.

29. A tension device resiliently exerting pressure on a tension roller (7) against a flexible transmission link (1) according to Claim 28, characterised in that said mechanical flexibility-limiting stop (10) disposed on the adjustable fixing (11) is placed inside the deformable parallelepipedic solid, its entry into contact taking place on the inner face of a composite flexible blade (14).

30. A tension device resiliently exerting pressure on a tension roller (7) against a flexible transmission link (1) according to Claim 28, characterised in that said mechanical flexibility-limiting stop (10) disposed on the adjustable fixing (11) is placed outside the deformable parallelepipedic solid, its entry into contact taking place on the outer face of a composite flexible blade (14).

31. A tension device resiliently exerting pressure on a tension roller (7) against a flexible transmission link (1) according to Claim 27, characterised in that the means of modifying the flexibility of the resilient tension device (8) over part of the range of spring is composed of a mechanical flexibility-correcting stop (10') associated with an opposing element (20) on which its entry into contact takes place, arranged inside the deformable parallelepipedic solid, the mechanical flexibility-correcting stop (10') being carried by the adjustable fixing (11), the opposing element (20) being carried by the bearing-carrier unit (12).

32. A tension device resiliently exerting pressure on a tension roller (7) against a flexible transmission link (1) according to Claim 31, characterised in that the mechanical flexibility-correcting stop (10') and the opposing element (20) are made of the composite material constituting the composite flexible blades (14).

33. A tension device resiliently exerting pressure on a tension roller (7) against a flexible transmission link (1) according to Claim 27, characterised in that the means for modifying the flexibility of the resilient tension device (8) over part of the range of spring is composed of a length of cable (21), the ends of which are pinched or embedded in the material(s) constituting the bearing-carrier unit (12) and the adjustable fixing (11), the tension of said length of cable (21) causing an increase in the rigidity of elastic return of the resilient tension device (8).

34. A tension device resiliently exerting pressure on a tension roller (7) against a flexible transmission link (1) according to Claim 33, characterised in that the length of cable (21) is composed of textile fibres such as polyamide, polyester, aramid or polyvinyl alcohol fibre.

35. A tension device resiliently exerting pressure on a tension roller (7) against a flexible transmission link (1) according to Claim 33, characterised in that the length of cable (21) is composed of a wire or a metal cable.

36. A tension device resiliently exerting pressure on a tension roller (7) against a flexible transmission link (1) according to Claim 27, characterised in that the means for modifying the flexibility of the resilient tension device (8') over part of the range of spring is composed of an oblique flexible blade (23) inserted in the deformable parallelepipedic solid, at least two of the extremities of which are connected by semi-embedded joints, the extremities of said oblique flexible blade (23) being connected in an analogous manner, and its function being to lower the rigidity of said resilient tension device (8') by shortening the centre distance of its axes.

37. A tension device resiliently exerting pressure on a tension roller (7) against a flexible transmission link (1) according to Claim 36, characterised in that the semi-embedded joints of the deformable parallelepipedic solid are constituted by a local reduction in thickness (22) over the whole width of the composite flexible blades (14), playing the role of a relatively flexible hinge.

38. A tension device resiliently exerting pressure on a tension roller (7) against a flexible transmission link (1) according to one of Claims 1 to 37, characterised in that each composite flexible blade (14) constituting a large face of the deformable parallelepipedic solid has a constant thickness over its whole width.

39. A tension device resiliently exerting pressure on a tension roller (7) against a flexible transmission link (1) according to one of Claims 1 to 37, characterised in that at least one composite flexible blade (14v), constituting a large face of the deformable parallelepipedic solid has a variable thickness, the thinning preferably being situated in the central zone.

40. A tension device resiliently exerting pressure on a tension roller (7) against a flexible transmission link (1) according to one of Claims 1 to 39, characterised in that the components are fixed by clamping to ensure the embedding of one of the mobile (A) or fixed (B) extremities, one being clasped by the bearing-carrier unit (12), and the other by the adjustable fixing (11), obtained by the crimping of a rectangular collar (25).

41. A tension device resiliently exerting pressure on a tension roller (7) against a flexible transmission link (1) according to one of Claims 1 to 39, characterised in that the components are fixed by clamping to ensure the embedding of one of the mobile (A) or fixed (B) extremities, one being clasped by the bearing-carrier unit (12) and the other by the adjustable fixing (11), obtained by two mounting bolts (26) with a clamping plate (27).

42. A tension device resiliently exerting pressure on a tension roller (7) against a flexible transmission link (1) according to one of Claims 1 to 39, characterised in that the components are fixed by clamping to ensure the embedding of one of the mobile (A) or fixed (B) extremities, one being clasped by the bearing-carrier unit (12) and the other by the adjustable fixing (11), obtained by structurally bonding the components.

43. A tension device resiliently exerting pressure on a tension roller (7) against a flexible transmission link (1) according to one of Claims 28 or 29, characterised in that the components are fixed by incorporating the extremities of non-joined bands (14a) and (14b) during the moulding of the polymeric material constituting the bearing-carrier unit (12) or the mechanical flexibility-limiting stop (10), thus ensuring the embedding of one of the mobile (A) or fixed (B) extremities.

44. A tension device resiliently exerting pressure on a tension roller (7) against a flexible transmission link (1) according to one of Claims 28 or 29, characterised in that the components are fixed by incorporating one of the sides of the closed bands (14c), (14d), during the moulding of the polymeric material constituting the bearing-carrier unit (12) or the mechanical flexibility-limiting stop (10), thus ensuring the embedding of one of the mobile (A) or fixed (B) extremities.
